# EUROPEAN PATENT SPECIFICATION

(11) **EP 3 611 959 B1**
(45) Date of publication and mention of the grant of the patent: **28.07.2021**
(21) Application number: 18794116.6
(22) Date of filing: 28.04.2018
(51) Int. Cl.: H04W 24/10

(54) **METHOD AND DEVICE FOR ALLOCATING RANDOM ACCESS RESOURCE**
VERFAHREN UND VORRICHTUNG ZUR ZUWEISUNG EINER ZUFALLSZUGRIFFSRESSOURCE
PROCÉDÉ ET DISPOSITIF D'ATTRIBUTION D'UNE RESSOURCE D'ACCÈS ALÉATOIRE

(30) Priority: 05.05.2017 CN 201710314166
(43) Date of publication of application: 19.02.2020
(73) Proprietor: Huawei Technologies Co., Ltd., Longgang District Shenzhen, Guangdong 518129 (CN)
(72) Inventor: LIU, Yalin, Shenzhen Guangdong 518129 (CN); YUAN, Shitong, Shenzhen Guangdong 518129 (CN)
(74) Representative: Pfenning, Meinig & Partner mbB
(86) International application number: PCT/CN2018/085185
(87) International publication number: WO 2018/202020

(56) References cited:
- EP-A1- 2 426 980
- EP-A1- 3 557 908
- WO-A1-2009/058069
- CN-A- 101 207 905
- CN-A- 102 111 831
- CN-A- 103 209 450
- US-B2- 9 629 015
- INTERDIGITAL: "UE mobility state reporting", 3GPP DRAFT; R2-081760, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080324, 24 March 2008 (2008-03-24), XP050139468, [retrieved on 2008-03-24]
- HUAWEI ET AL: "Allocation of appropriate RACH resources for handover", 3GPP DRAFT; R2-1704843 ALLOCATION OF APPROPRIATE RACH RESOURCES FOR HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Hangzhou, China; 20170515 - 20170519 14 May 2017 (2017-05-14), XP051275359, Retrieved from the Internet: URL:http://www.3gpp.org/ftp/Meetings_3GPP_ SYNC/RAN2/Docs/ [retrieved on 2017-05-14]

## Description

### TECHNICAL FIELD

Embodiments of this application relate to the field of communications technologies, and in particular, to random access resource allocation.

### BACKGROUND

Development of mobile services imposes an increasingly high requirement on a data rate and efficiency in wireless communication. In a future wireless communications system, a beamforming technology is used to limit energy of a transmitted signal to a beam direction, to increase efficiency of sending and receiving signals.

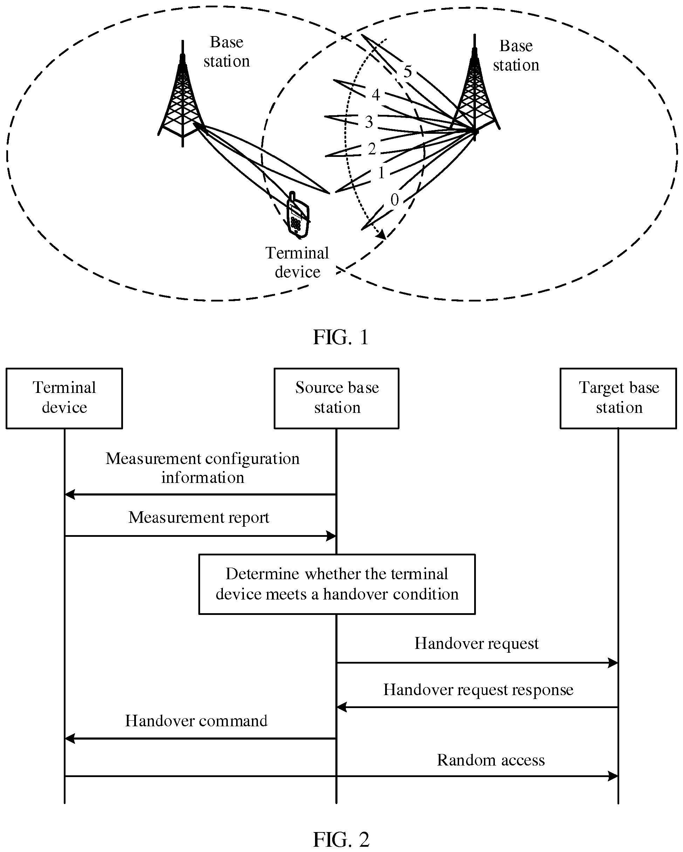

When moving from a serving cell to a neighboring cell, a terminal device needs to re-initiate access in the new cell. A source base station to which the serving cell belongs sends a handover request to a target base station to which the neighboring cell belongs, and the source base station receives a handover request response sent by the target base station. The handover request response includes information used to indicate a random access resource configured by the target base station for the terminal device. However, there is a time difference between a moment at which the target base station sends the handover request response to the source base station and a moment at which the terminal device actually initiates random access to the target base station. Therefore, if the terminal device is in a high-speed mobility state, when the terminal device initiates random access, the random access resource configured by the target base station for the terminal device may already become invalid. For example, referring to FIG. 1, the target base station configures random access resources of a beam 0 and a beam 1 for the terminal device. However, when the terminal device starts performing random access, the terminal device has moved to coverage of a beam 2. In this case, the terminal device can no longer perform random access by using the random access resource corresponding to the beam 0 or the random access resource corresponding to the beam 1, but the target base station does not allocate a random access resource corresponding to the beam 2 to the terminal device. In this case, the terminal device needs to initiate random access by using a contention-based random access resource. If another terminal device also initiates access by using the contention-based random access resource at the same time, a conflict is caused, and access of the terminal device may fail in a handover process.

Therefore, it may be learned that, in the prior art, a handover success rate of the terminal device in the cell handover process is relatively low.
The following references are provided:
R1: US 9 629 015 B2
R2: EP 2 426 980 A1
R3: Interdigital: "UE mobility state reporting" , 3GPP Draft; R2-081760, vol. RAN WG2, Shenzhen, China, 20080324, 24 March 2008,
R4 (representing prior art falling under Article 54(3) EPC): EP 3 557 908 A1
R1 discloses a method for reporting mobility information in wireless communication systems. R2 proposes a method for reporting a mobility state of a mobile terminal. R3 discusses various possibilities for reporting the mobility state of a user equipment. However, none of the references R1 to R3 describes a cell hand over process for beam forming technology. Document R4, which represents prior art falling under Article 54(3) EPC, provides a cell handover method and apparatus taking into account beam configuration information. However, mobility state information is not properly taken into account in R4.

### SUMMARY

The invention is defined by the appended claims. In the present application, reference is also made in the following to other embodiments, aspects and designs not falling within the scope of the claims, which may be helpful for understanding the invention.
Embodiments of this application provide a random access resource allocation to increase a handover success rate of a terminal device.

According to a first aspect, a random access resource allocation method is provided. The method may be performed by a target network device, and the target network device is, for example, a target base station. The method includes: receiving, by the target network device, a cell handover request that is sent by a source network device and that is used to request to hand over a terminal device from the source network device to the target network device, where the cell handover request includes mobility state information of the terminal device and a measurement report of the terminal device; and allocating, by the target network device, a random access resource to the terminal device based on the mobility state information and the measurement report.

In this embodiment of this application, when the terminal device needs to perform cell handover, the mobility state information of the terminal device may be sent to the target base station by using the cell handover request, to be used by the target base station to allocate, to the terminal device, a non-contention-based dedicated random access resource corresponding to beam information reported by the terminal device.

In this embodiment of this application, the mobility state information of the terminal device may be at least one of a mobility speed, a mobility direction, and a mobility state. The mobility speed may be a mobility speed of the terminal device, or may be a speed at which the terminal device switches a downlink beam within predetermined duration. This is not limited in this embodiment of this application.

In this embodiment of this application, because the target network device allocates the random access resource to the terminal device based on the mobility state information of the terminal device, a manner in which the target network device allocates the random access resource to the terminal device is more flexible, and an access failure probability of the terminal device in a handover process can be effectively reduced, thereby increasing a handover success rate of the terminal device.

In this embodiment of this application, the source network device may alternatively send, to the target network device, a factor used to determine the mobility state information of the terminal device, for example, a quantity of downlink beams switched by the terminal device within predetermined duration, or a quantity of downlink beams switched by the terminal device within predetermined duration and a distance between the terminal device and the source network device. The target network device determines a mobility state of the terminal device based on the foregoing factor. This is not limited in this embodiment of this application.

The allocating, by the target network device, a random access resource to the terminal device based on the mobility state information and the measurement report includes: allocating, by the target network device, the random access resource to the terminal device based on the mobility state information and beam information that is included in the measurement report.

In this embodiment of this application, the target base station may allocate the random access resource to the terminal device based on the mobility state information of the terminal device and the beam information that is included in the measurement report. The manner in which the target network device allocates the random access resource to the terminal device is more flexible, and the access failure probability of the terminal device in the handover process can be effectively reduced or the target base station is effectively prevented from providing excessive random access resources, thereby reducing waste of resources while ensuring the handover success rate of the terminal device.

In a possible design, the measurement report includes a current measurement report, and the current measurement report is a measurement report reported by the terminal device for performing a current handover; and the allocating, by the target network device, the random access resource to the terminal device based on the mobility state information and beam information that is included in the measurement report includes: allocating, by the target network device to the terminal device based on the mobility state information, a random access resource corresponding to a beam indicated by beam information included in the current measurement report, and a random access resource corresponding to n beams related to the beam, where n is an integer, and n is determined based on the mobility state information and a random access resource that can be provided by the target network device.

In this embodiment of this application, the target base station allocates, to the terminal device, the random access resource corresponding to the beam indicated by the current measurement report and the random access resource corresponding to the n beams related to the indicated beam. Because the indicated beam and the n beams related to the indicated beam can cover a mobility range of the terminal device, it can be ensured that the terminal device performs access by using a valid random access resource, thereby ensuring the handover success rate of the terminal device.

In this embodiment of this application, "related" may mean that a beam is neighboring to the beam indicated by the beam information, or may mean that a beam is neighboring to and is spaced by n beams from the beam indicated by the beam information. For example, if n is 1, the beam may be a beam neighboring to the beam indicated by the beam information, or may be a beam that is spaced by one beam from the beam indicated by the beam information.

In a possible design, the measurement report includes a current measurement report of the terminal device and a historical measurement report of the terminal device, the current measurement report is a measurement report reported by the terminal device for performing a current handover, and the historical measurement report is a measurement report reported by the terminal device for performing a handover operation before the current handover; and the allocating, by the target network device, the random access resource to the terminal device based on the mobility state information and beam information that is included in the measurement report includes: obtaining, by the target network device, a mobility direction of the terminal device based on the current measurement report and the historical measurement report; and allocating, by the target network device, the random access resource to the terminal device based on the mobility state information, the mobility direction, and the beam information that is included in the current measurement report.

In this embodiment of this application, on the basis of obtaining the mobility state information of the terminal device, the target network device further determines the mobility direction of the terminal device based on the current measurement report and the historical measurement report. The target network device can more accurately allocate the random access resource to the terminal device based on the mobility state information and the mobility direction.

In a possible design, the mobility state information includes a high mobility state, a medium mobility state, and a normal mobility state, the high mobility state is a state in which a quantity of downlink beams switched by the terminal device within predetermined duration is greater than a first predetermined quantity, the medium mobility state is a state in which the quantity of downlink beams switched by the terminal device within the predetermined duration is greater than a second predetermined quantity and is less than or equal to the first predetermined quantity, the normal mobility state is a state in which the quantity of downlink beams switched by the terminal device within the predetermined duration is less than or equal to the second predetermined quantity, the first predetermined quantity is obtained based on a requirement on a handover success rate of the terminal device and/or the random access resource that can be provided by the target network device, and the second predetermined quantity is obtained based on the requirement on the handover success rate of the terminal device and/or the random access resource that can be provided by the target network device.

In this embodiment of this application, the high mobility state is a state in which the quantity of downlink beams switched by the terminal device within the predetermined duration is greater than or equal to the first predetermined quantity, the medium mobility state is a state in which the quantity of downlink beams switched by the terminal device within the predetermined duration is greater than or equal to the second predetermined quantity and is less than the first predetermined quantity, and the normal mobility state is a state in which the quantity of downlink beams switched by the terminal device within the predetermined duration is less than the second predetermined quantity. Alternatively, the high mobility state is a state in which the quantity of downlink beams switched by the terminal device within the predetermined duration is greater than or equal to the first predetermined quantity, the medium mobility state is a state in which the quantity of downlink beams switched by the terminal device within the predetermined duration is greater than the second predetermined quantity and is less than the first predetermined quantity, and the normal mobility state is a state in which the quantity of downlink beams switched by the terminal device within the predetermined duration is less than or equal to the second predetermined quantity. Alternatively, the high mobility state is a state in which the quantity of downlink beams switched by the terminal device within the predetermined duration is greater than the first predetermined quantity, the medium mobility state is a state in which the quantity of downlink beams switched by the terminal device within the predetermined duration is greater than or equal to the second predetermined quantity and is less than or equal to the first predetermined quantity, and the normal mobility state is a state in which the quantity of downlink beams switched by the terminal device within the predetermined duration is less than the second predetermined quantity.

In this embodiment of this application, the mobility state of the terminal device may be determined based on the quantity of downlink beams switched by the terminal device within the predetermined duration, or may be determined based on the quantity of downlink beams switched by the terminal device within the predetermined duration and the distance between the terminal device and the source network device. This is not limited in this embodiment of this application.

In this embodiment of this application, both the first predetermined quantity and the second predetermined quantity may be set based on the requirement on the handover success rate of the terminal device and/or the random access resource that can be provided by the target base station, or may be set based on another actual requirement. This is not limited in this embodiment of this application.

According to a second aspect, a random access resource allocation method is provided. The method may be performed by a source network device, and the source network device is, for example, a source base station. The method includes: obtaining, by the source network device, mobility state information of a terminal device; and sending, by the source network device to a target network device, a cell handover request used to request to hand over the terminal device from the source network device to the target network device, where the cell handover request includes the mobility state information and a measurement report of the terminal device, and the mobility state information and the beam information that is included in the measurement report are used by the target network device to allocate a random access resource to the terminal device.

In this embodiment of this application, the source network device obtains the mobility state information of the terminal device, and sends the cell handover request to the target network device. The cell handover request includes the mobility state information of the terminal device and the measurement report of the terminal device, so that the target network device may allocate the random access resource to the terminal device based on a mobility state and the measurement report of the terminal device. Because the target network device allocates the random access resource to the terminal device based on the mobility state of the terminal device, a manner in which the target network device allocates the random access resource to the terminal device is more flexible, and an access failure probability of the terminal device in a handover process can be effectively reduced, thereby increasing a handover success rate of the terminal device.

In a possible design, the obtaining, by the source network device, mobility state information of a terminal device includes:
determining, by the source network device, a quantity of downlink beams switched by the terminal device within predetermined duration; and
obtaining, by the source network device, the mobility state information of the terminal device based on the quantity.

In this embodiment of this application, because a cell of the source network device is covered by a plurality of beams, the mobility state information of the terminal device may be determined based on the quantity of downlink beams switched by the terminal device within the predetermined duration. This implementation is relatively simple.

In a possible design, the obtaining, by the source network device, mobility state information of a terminal device includes: determining, by the source network device, a quantity of downlink beams switched by the terminal device within predetermined duration, and determining a distance between the terminal device and the source network device; and obtaining, by the source network device, the mobility state information of the terminal device based on the quantity and the distance.

In this embodiment of this application, when the terminal device is located at a different location in the cell of the source network device, the quantity of downlink beams switched by the terminal device within the predetermined duration may be different. Therefore, the source network device can more accurately obtain the mobility state information of the terminal device with reference to the quantity of downlink beams switched by the terminal device within the predetermined duration, and the distance between the terminal device and the source network device.

In this embodiment of this application, the source base station may alternatively obtain the mobility state information by using the terminal device. Specifically, the terminal device obtains the mobility state information of the terminal device. For example, the terminal device obtains a mobility speed by using a speed sensor or a global positioning system (Global Positioning System, GPS), obtains a mobility direction by using a direction sensor or an angle sensor, and then sends the obtained mobility state information to the source base station. Alternatively, the terminal device obtains the mobility state information in another manner. This is not limited in this embodiment of this application.

In a possible design, if the quantity is greater than a first predetermined quantity, the source network device obtains that the mobility state information of the terminal device is a high mobility state; if the quantity is greater than a second predetermined quantity and is less than or equal to a first predetermined quantity, the source network device obtains that the mobility state information of the terminal device is a medium mobility state; or if the quantity is less than or equal to a second predetermined quantity, the source network device obtains that the mobility state information of the terminal device is a normal mobility state, where the first predetermined quantity is obtained based on a requirement on a handover success rate of the terminal device and/or a random access resource that can be provided by the target network device, and the second predetermined quantity is obtained based on the requirement on the handover success rate of the terminal device and/or the random access resource that can be provided by the target network device.

In this embodiment of this application, if the quantity is greater than or equal to the first predetermined quantity, the source network device obtains that the mobility state information of the terminal device is the high mobility state; if the quantity is greater than or equal to the second predetermined quantity and is less than the first predetermined quantity, the source network device obtains that the mobility state information of the terminal device is the medium mobility state; and if the quantity is less than the second predetermined quantity, the source network device obtains that the mobility state information of the terminal device is the normal mobility state. Alternatively, if the quantity is greater than or equal to the first predetermined quantity, the source network device obtains that the mobility state information of the terminal device is the high mobility state; if the quantity is greater than the second predetermined quantity and is less than the first predetermined quantity, the source network device obtains that the mobility state information of the terminal device is the medium mobility state; and if the quantity is less than or equal to the second predetermined quantity, the source network device obtains that the mobility state information of the terminal device is the normal mobility state. Alternatively, if the quantity is greater than the first predetermined quantity, the source network device obtains that the mobility state information of the terminal device is the high mobility state; if the quantity is greater than or equal to the second predetermined quantity and is less than or equal to the first predetermined quantity, the source network device obtains that the mobility state information of the terminal device is the medium mobility state; and if the quantity is less than the second predetermined quantity, the source network device obtains that the mobility state information of the terminal device is the normal mobility state.

In this embodiment of this application, the mobility state of the terminal device may be determined based on the quantity of downlink beams switched by the terminal device within the predetermined duration, or may be determined based on the quantity of downlink beams switched by the terminal device within the predetermined duration and the distance between the terminal device and the source network device. This is not limited in this embodiment of this application.

In this embodiment of this application, both the first predetermined quantity and the second predetermined quantity may be set based on the requirement on the handover success rate of the terminal device and/or the random access resource that can be provided by a target base station, or may be set based on another actual requirement. This is not limited in this embodiment of this application.

In a possible design, the measurement report includes a current measurement report of the terminal device; or the measurement report includes a current measurement report of the terminal device and a historical measurement report of the terminal device, where the current measurement report is a measurement report reported by the terminal device for performing a current handover, and the historical measurement report is a measurement report reported by the terminal device for performing a handover operation before the current handover.

In this embodiment of this application, the measurement report may be the current measurement report, or may be the current measurement report and the historical measurement report, so that the target base station can more accurately allocate the random access resource to the terminal device based on the current measurement report and the historical measurement report.

According to a third aspect, a random access resource allocation method is provided. The method includes: receiving, by a target cell network device, a measurement report sent by a source cell network device, where the measurement report includes mobility state information of a terminal device; and allocating, by the target cell network device, a random access resource to the terminal device based on the mobility state information and information, other than the mobility state information, in the measurement report.

The allocating, by the target cell network device, a random access resource to the terminal device based on the mobility state information and information, other than the mobility state information, in the measurement report includes: allocating, by the target cell network device, the random access resource to the terminal device based on the mobility state information and beam information that is included in the measurement report.

In a possible design manner, the measurement report includes a current measurement report of the terminal device, and the current measurement report is a measurement report reported by the terminal device for performing a current handover; and the allocating, by the target cell network device, the random access resource to the terminal device based on the mobility state information and beam information that is included in the measurement report includes: allocating, by the target cell network device to the terminal device based on the mobility state information, a random access resource corresponding to a beam indicated by beam information included in the current measurement report, and a random access resource corresponding to n beams related to the beam, where n is an integer, and n is obtained based on the mobility state information and a random access resource that can be provided by the target cell network device.

In a possible design manner, the measurement report includes a current measurement report and a historical measurement report, the current measurement report is a measurement report reported by the terminal device for performing a current handover, and the historical measurement report is a measurement report reported by the terminal device for performing a handover operation before the current handover; and the allocating, by the target cell network device, the random access resource to the terminal device based on the mobility state information and beam information that is included in the measurement report includes: obtaining, by the target cell network device, a mobility direction of the terminal device based on the historical measurement report and information, other than the mobility state information, in the current measurement report; and allocating, by the target cell network device, the random access resource to the terminal device based on the mobility state information, the mobility direction, and beam information that is included in the current measurement report.

In a possible design manner, the mobility state information includes a high mobility state, a medium mobility state, and a normal mobility state, the high mobility state is a state in which a quantity of downlink beams switched by the terminal device within predetermined duration is greater than a first predetermined quantity, the medium mobility state is a state in which the quantity of downlink beams switched by the terminal device within the predetermined duration is greater than a second predetermined quantity and is less than or equal to the first predetermined quantity, the normal mobility state is a state in which the quantity of downlink beams switched by the terminal device within the predetermined duration is less than or equal to the second predetermined quantity, the first predetermined quantity is obtained based on a requirement on a handover success rate of the terminal device and/or a random access resource that can be provided by the target network device, and the second predetermined quantity is obtained based on the requirement on the handover success rate of the terminal device and/or the random access resource that can be provided by the target network device.

According to a fourth aspect, a random access resource allocation method is provided. The method includes: obtaining, by a source cell network device, mobility state information of a terminal device; and sending, by the source cell network device, a measurement report to a target cell network device, where the measurement report includes the mobility state information, the mobility state information and beam information included in the measurement report are used by the target cell network device to allocate a random access resource to the terminal device.

In a possible design manner, the obtaining, by a source cell network device, mobility state information of a terminal device includes: determining, by the source cell network device, a quantity of downlink beams switched by the terminal device within predetermined duration; and obtaining, by the source cell network device, the mobility state information of the terminal device based on the quantity.

In a possible design manner, the obtaining, by a source cell network device, mobility state information of a terminal device includes: determining, by the source cell network device, a quantity of downlink beams switched by the terminal device within predetermined duration, and determining a distance between the terminal device and the source cell network device; and obtaining, by the source cell network device, the mobility state information of the terminal device based on the quantity and the distance.

In a possible design manner, the obtaining, by the source cell network device, the mobility state information of the terminal device based on the quantity includes: if the quantity is greater than a first predetermined quantity, obtaining, by the source cell network device, that the mobility state information of the terminal device is a high mobility state; if the quantity is greater than a second predetermined quantity and is less than or equal to a first predetermined quantity, obtaining, by the source cell network device, that the mobility state information of the terminal device is a medium mobility state; and if the quantity is less than or equal to a second predetermined quantity, obtaining, by the source cell network device, that the mobility state information of the terminal device is a normal mobility state, where the first predetermined quantity is obtained based on a requirement on a handover success rate of the terminal device and/or a random access resource that can be provided by the target network device, and the second predetermined quantity is obtained based on the requirement on the handover success rate of the terminal device and/or the random access resource that can be provided by the target network device.

In a possible design manner, the measurement report includes a current measurement report of the terminal device; or the measurement report includes a current measurement report of the terminal device and a historical measurement report of the terminal device, where the current measurement report is a measurement report reported by the terminal device for performing a current handover, and the historical measurement report is a measurement report reported by the terminal device for performing a handover operation before the current handover.

According to a fifth aspect, a random access resource allocation method is provided. The method may be performed by a terminal device. The method includes: obtaining, by the terminal device, mobility state information of the terminal device; and sending, by the terminal device, the mobility state information to a source base station, where the mobility state information is used when the source base station sends, to a target base station, a cell handover request used to request to hand over the terminal device from the source base station to the target base station, so that the target base station allocates a random access resource to the terminal device based on the mobility state information and beam information included in a measurement report of the terminal device.

In this embodiment of this application, the terminal device can obtain the mobility state information of the terminal device and send the mobility state information to the source base station, to add the mobility state information of the terminal device to the cell handover request sent by the source base station to the target base station. Because the target network device allocates the random access resource to the terminal device based on the mobility state information of the terminal device, a manner in which the target network device allocates the random access resource to the terminal device is more flexible, and an access failure probability of the terminal device in a handover process can be effectively reduced, thereby increasing a handover success rate of the terminal device.

In a possible design manner, the mobility state information includes at least one of a mobility state, a mobility direction, and a mobility speed.

In this embodiment of this application, the mobility state information of the terminal device may include different content, and the foregoing several types of content are only examples. The content of the mobility state information is not limited in this embodiment of this application.

According to a sixth aspect, a communications apparatus is provided. The communications apparatus has functions for implementing the network device in the foregoing method design. The functions may be implemented by hardware, or may be implemented by hardware executing corresponding software. The hardware or the software includes one or more units corresponding to the foregoing functions.

In a possible design, a specific structure of the communications apparatus may include a receiving module and an allocation module. The receiving module and the allocation module may perform corresponding functions in the method provided in the first aspect or any possible design of the first aspect.

According to a seventh aspect, a communications apparatus is provided. The communications apparatus has functions for implementing the network device in the foregoing method design. The functions may be implemented by hardware, or may be implemented by hardware executing corresponding software. The hardware or the software includes one or more units corresponding to the foregoing functions.

In a possible design, a specific structure of the communications apparatus may include an obtaining module and a sending module. The obtaining module and the sending module may perform corresponding functions in the method provided in the second aspect or any possible design of the second aspect.

According to an eighth aspect, a communications apparatus is provided. The communications apparatus has functions for implementing the network device in the foregoing method design. The functions may be implemented by hardware, or may be implemented by hardware executing corresponding software. The hardware or the software includes one or more units corresponding to the foregoing functions.

In a possible design, a specific structure of the communications apparatus may include a receiving module and an allocation module. The receiving module and the allocation module may perform corresponding functions in the method provided in the third aspect or any possible design of the third aspect.

According to a ninth aspect, a communications apparatus is provided. The communications apparatus has functions for implementing the network device in the foregoing method design. The functions may be implemented by hardware, or may be implemented by hardware executing corresponding software. The hardware or the software includes one or more units corresponding to the foregoing functions.

In a possible design, a specific structure of the network device may include an obtaining module and a sending module. The obtaining module and the sending module may perform corresponding functions in the method provided in the fourth aspect or any possible design of the fourth aspect.

According to a tenth aspect, a communications apparatus is provided. The communications apparatus has functions for implementing the terminal device in the foregoing method design. The functions may be implemented by hardware, or may be implemented by hardware executing corresponding software. The hardware or the software includes one or more units corresponding to the foregoing functions.

In a possible design, a specific structure of the communications apparatus may include an obtaining module and a sending module. The obtaining module and the sending module may perform corresponding functions in the method provided in the fifth aspect or any possible design of the fifth aspect.

According to an eleventh aspect, a communications apparatus is provided. The communications apparatus may be a network device, or may be a functional module such as a chip disposed in a network device. The communications apparatus includes: a memory configured to store computer-executable program code, a communications interface, and a processor. The processor is coupled to the memory and the communications interface, the memory may be disposed in the processor, and the memory and the processor may be implemented by using a chip. The program code stored in the memory includes an instruction. When the processor executes the instruction, the instruction enables the communications apparatus to perform the method performed by the network device in the first aspect or any possible design of the first aspect.

According to a twelfth aspect, a communications apparatus is provided. The communications apparatus may be a network device, or may be a functional module such as a chip disposed in a network device. The communications apparatus includes: a memory configured to store computer-executable program code, a communications interface, and a processor. The processor is coupled to the memory and the communications interface, the memory may be disposed in the processor, and the memory and the processor may be implemented by using a chip. The program code stored in the memory includes an instruction. When the processor executes the instruction, the instruction enables the communications apparatus to perform the method performed by the network device in the second aspect or any possible design of the second aspect.

According to a thirteenth aspect, a communications apparatus is provided. The communications apparatus may be a network device, or may be a functional module such as a chip disposed in a network device. The communications apparatus includes: a memory configured to store computer-executable program code, a communications interface, and a processor. The processor is coupled to the memory and the communications interface, the memory may be disposed in the processor, and the memory and the processor may be implemented by using a chip. The program code stored in the memory includes an instruction. When the processor executes the instruction, the instruction enables the communications apparatus to perform the method performed by the network device in the third aspect or any possible design of the third aspect.

According to a fourteenth aspect, a communications apparatus is provided. The communications apparatus may be a network device, or may be a functional module such as a chip disposed in a network device. The communications apparatus includes: a memory configured to store computer-executable program code, a communications interface, and a processor. The processor is coupled to the memory and the communications interface, the memory may be disposed in the processor, and the memory and the processor may be implemented by using a chip. The program code stored in the memory includes an instruction. When the processor executes the instruction, the instruction enables the communications apparatus to perform the method performed by the network device in the fourth aspect or any possible design of the fourth aspect.

According to a fifteenth aspect, a communications apparatus is provided. The communications apparatus may be a terminal device, or may be a functional module such as a chip disposed in a terminal device. The communications apparatus includes: a memory configured to store computer-executable program code, a communications interface, and a processor. The processor is coupled to the memory and a transceiver, the memory may be disposed in the processor, and the memory and the processor may be implemented by using a chip. The program code stored in the memory includes an instruction. When the processor executes the instruction, the instruction enables the communications apparatus to perform the method performed by the terminal device in the fifth aspect or any possible design of the fifth aspect.

According to a sixteenth aspect, a computer storage medium is provided. The computer storage medium is configured to store a computer software instruction used by the communications apparatus described in the sixth aspect or the communications apparatus described in the eleventh aspect, and includes a program designed for the network device in the first aspect or any possible design of the first aspect.

According to a seventeenth aspect, a computer storage medium is provided. The computer storage medium is configured to store a computer software instruction used by the communications apparatus described in the seventh aspect or the communications apparatus described in the twelfth aspect, and includes a program designed for the network device in the second aspect or any possible design of the second aspect.

According to an eighteenth aspect, a computer storage medium is provided. The computer storage medium is configured to store a computer software instruction used by the communications apparatus described in the eighth aspect or the communications apparatus described in the thirteenth aspect, and includes a program designed for the network device in the third aspect or any possible design of the third aspect.

According to a nineteenth aspect, a computer storage medium is provided. The computer storage medium is configured to store a computer software instruction used by the communications apparatus described in the ninth aspect or the communications apparatus described in the fourteenth aspect, and includes a program designed for the network device in the fourth aspect or any possible design of the fourth aspect.

According to a twentieth aspect, a computer storage medium is provided. The computer storage medium is configured to store a computer software instruction used by the communications apparatus described in the tenth aspect or the communications apparatus described in the fifteenth aspect, and includes a program designed for the terminal device in the fifth aspect or any possible design of the fifth aspect.

In the embodiments of this application, the target network device receives the cell handover request that is sent by the source network device and that is used to request to hand over the terminal device from the source network device to the target network device, and the cell handover request includes the mobility state information of the terminal device and the measurement report of the terminal device. The target network device may allocate the random access resource to the terminal device based on the mobility state information and the measurement report of the terminal device. Because the target network device allocates the random access resource to the terminal device based on the mobility state of the terminal device, the manner in which the target network device allocates the random access resource to the terminal device is more flexible, and the access failure probability of the terminal device in the handover process can be effectively reduced, thereby increasing the handover success rate of the terminal device.

### BRIEF DESCRIPTION OF DRAWINGS

FIG. 1 is a schematic diagram of a process in which a network device allocates a random access resource to a terminal device in the prior art;
FIG. 2 is a schematic diagram of a cell handover process in the prior art;
FIG. 3 is a schematic diagram of an application scenario according to an embodiment of this application;
FIG. 4 is a flowchart of a random access resource allocation method according to an embodiment of this application;
FIG. 5 is a schematic diagram of determining mobility state information of a terminal device in a random access resource allocation method according to an embodiment of this application;
FIG. 6A and FIG. 6B are another flowchart of a random access resource allocation method according to an embodiment of this application;
FIG. 7 is another flowchart of a random access resource allocation method according to an embodiment of this application;
FIG. 8 is another flowchart of a random access resource allocation method according to an embodiment of this application; and
FIG. 9 to FIG. 14 are several schematic structural diagrams of communications apparatuses according to embodiments of this application.

### DESCRIPTION OF EMBODIMENTS

To make objectives, technical solutions, and advantages of embodiments of this application clearer, the following further describes the embodiments of this application in detail with reference to the accompanying drawings.

The technical solutions described in this specification may be applied to a fifth generation mobile communications technology (5G) system, or may be applied to a next generation mobile communications system.

The following describes some terms in the embodiments of this application, to facilitate understanding of a person skilled in the art.
(1) A network device includes, for example, a base station (for example, an access point), and may be a device that is in an access network and that communicates with a wireless terminal device by using one or more cells over an air interface. The base station may be configured to mutually convert a received over-the-air frame and an IP packet, and serve as a router between the terminal device and a remaining part of the access network, where the remaining part of the access network may include an IP network. The base station may further coordinate attribute management of the air interface. For example, the base station may include an evolved NodeB (NodeB, eNB, e-NodeB, evolutional NodeB) in a long term evolution (Long Term Evolution, LTE) system or an evolved LTE system (LTE-Advanced, LTE-A), or may include a next generation NodeB (next generation NodeB, gNB) in a 5G system. This is not limited in the embodiments of this application.
(2) A terminal device may be a device that provides a user with voice and/or data connectivity, for example, may be a handheld device with a wireless connection function, or a processing device connected to a wireless modem. The terminal device may communicate with a core network by using a radio access network (Radio Access Network, RAN), and exchange voice and/or data with the RAN. The terminal device may include user equipment (User Equipment, UE), a wireless terminal device, a mobile terminal device, a subscriber unit (Subscriber Unit), a subscriber station (Subscriber Station), a mobile station (Mobile Station), a Mobile, a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal device may include a mobile phone (or referred to as a "cellular" phone), a computer having a mobile terminal device, a portable, pocket-sized, handheld, computer built-in, or vehicle-mounted mobile apparatus, a smart wearable device, or the like. For example, the terminal device is a personal communication service (Personal Communication Service, PCS) phone, a cordless phone, a session initiation protocol (SIP) phone set, a wireless local loop (Wireless Local Loop, WLL) station, a personal digital assistant (Personal Digital Assistant, PDA), a smart watch, a smart helmet, smart glasses, a smart band, and other devices. The terminal device further includes a limited device, for example, a device with relatively low power consumption, a device with a limited storage capability, or a device with a limited computing capability. For example, the terminal device includes an information sensing device such as a barcode, a radio frequency identification (RFID) device, a sensor, a global positioning system (GPS), or a laser scanner.
(3) A beam (beam) is directional signal coverage formed in space by an antenna array by allocating energy at different antenna ports and adjusting a phase, to superimpose signals in a direction. The coverage of the beam dynamically changes. Beams of a base station include an uplink beam and a downlink beam. The base station receives, by using the uplink beam, an uplink signal sent by a terminal device, and the base station sends a downlink signal to the terminal device by using the downlink beam.
   In the embodiments of this application, the "beam" may also be referred to as a "transmission resource" or the like. In other words, the name of the "beam" is not limited in this application, provided that the foregoing concept is expressed.
(4) A random access resource (Random Access Channel Resources, RACH Resources) includes time-frequency codes. For example, when a terminal device selects a group of determined random access resources, a time point at which the terminal device initiates random access, a frequency, and a preamble used when the terminal device initiates random access are determined.
(5) An X2 interface is an interconnection interface between two base stations, and supports direct transmission of data and signaling. The name of the "X2 interface" is not limited in this application, provided that the foregoing concept is expressed.
(6) An S1 interface is a communications interface between a base station and a packet core network (Evolved Packet Core, EPC) in an LTE system. The S1 interface inherits a concept of separation of control and bearer, and is divided into two interfaces: an interface S1-MME used to connect the base station and a mobility management entity (Mobility Management Entity, MME), and an interface S1-U used to connect the base station and a serving gateway (Serving Gateway, SGW). The name of the "S1 interface" is not limited in this application, provided that the foregoing concept is expressed.
(7) An MME is configured to manage location information, security, and service continuity of the terminal device. The name of the "MME" is not limited in this application, and the MME may alternatively be another entity that is in a core network and that can implement the foregoing functions.
(8) The terms "system" and "network" may be used interchangeably in the embodiments of this application. "A plurality of" means two or more than two, and therefore, "a plurality of" may also be understood as "at least two" in the embodiments of this application. The term "and/or" describes an association relationship between associated objects and represents that three relationships may exist. For example, A and/or B may represent the following three cases: Only A exists, both A and B exist, and only B exists. In addition, the character "/", unless otherwise specified, usually indicates an "or" relationship between the associated objects.

Currently, in the LTE system or the LTE-A system, that a signal on which beamforming is not performed is used to cover an entire cell may be considered as that a fixed wide beam is used to cover the entire cell. Therefore, in this scenario, if moving from a serving cell to a neighboring cell, the terminal device needs to initiate random access in the new cell. Referring to FIG. 2, a specific cell handover process may include the following steps:
1. A source base station sends measurement configuration (Measurement Configuration) information to the terminal device.
   For example, the source base station may send the measurement configuration information to the terminal device by using a message configuration (measConfig) information element carried in a radio resource control connection reconfiguration message (Radio Resource Control Connection Reconfiguration), where the measurement configuration information includes an object that the terminal device needs to measure, a report manner, a measurement identifier, an event parameter, and the like.
   The report manner is a time trigger type, and includes periodic report and event-triggered report. For the measurement identifier, each measurement ID corresponds to one measurement object and one report configuration, or a plurality of measurement IDs correspond to a plurality of measurement objects and one same report configuration, or a plurality of measurement IDs correspond to one measurement object and a plurality of report configurations. The event parameter includes a serving cell measurement result, a hysteresis parameter for an event, a threshold parameter for the event, and the like.
2. The terminal device measures, based on the received measurement configuration information, a downlink reference signal sent by a target base station, to obtain a measurement report, and sends the measurement report to the source base station.
3. The source base station determines, based on the received measurement report, whether the terminal device meets a handover condition.
4. If the terminal device meets the handover condition, the source base station sends a cell handover request (Handover Request) to the target base station, where the cell handover request includes the measurement report of the terminal device.
5. The target base station sends a handover request response (Handover Request Response) to the source base station based on the received cell handover request, where the handover request response includes a random access resource allocated to the terminal device.
6. The source base station sends a handover command (Handover Command) to the terminal device based on the received handover request response, where the handover command includes the random access resource allocated by the target base station to the terminal device.
7. The terminal device performs random access by using the allocated random access resource.

In the foregoing cell handover process, because a beamforming technology is not widely used in the LTE system, when the terminal device performs random access in the new cell, there is no beam selection problem. However, in a system in which beam coverage is used, when moving from the serving cell to the neighboring cell, the terminal device needs to re-initiate access in the new cell, and the source base station to which the serving cell belongs sends the handover request to the target base station to which the neighboring cell belongs. The source base station receives the handover request response sent by the target base station, and the handover request response includes information used to indicate the random access resource configured by the target base station for the terminal device. However, there is a time difference between a moment at which the target base station sends the handover request response to the source base station and a moment at which the terminal device actually initiates random access to the target base station. Therefore, if the terminal device is in a high-speed mobility state, the random access resource configured by the target base station for the terminal device may already become invalid. For example, referring to FIG. 1, the target base station configures, for the terminal device, random access resources of a beam 0 and a beam 1 in beam information of the measurement report of the terminal device. However, when the terminal device starts performing random access, the terminal device has moved to coverage of a beam 2. In this case, the terminal device can no longer perform random access by using the random access resource corresponding to the beam 0 or the random access resource corresponding to the beam 1, but the target base station does not allocate a random access resource corresponding to the beam 2 to the terminal device. In this case, the terminal device needs to initiate random access by using a contention-based random access resource. If another terminal device also initiates access by using the contention-based random access resource at the same time, a conflict is caused, and access of the terminal device may fail in a handover process.

In view of this, an embodiment of this application provides a random access resource allocation method. In the random access resource allocation method, a target network device receives a cell handover request that is sent by a source network device and that is used to request to hand over a terminal device from the source network device to the target network device, where the cell handover request includes mobility state information of the terminal device and a measurement report of the terminal device; and the target network device may allocate a random access resource to the terminal device based on the mobility state information and the measurement report of the terminal device. Because the target network device allocates the random access resource to the terminal device based on a mobility state of the terminal device, a manner in which the target network device allocates the random access resource to the terminal device is more flexible, and an access failure probability of the terminal device in a handover process can be effectively reduced, thereby increasing a handover success rate of the terminal device.

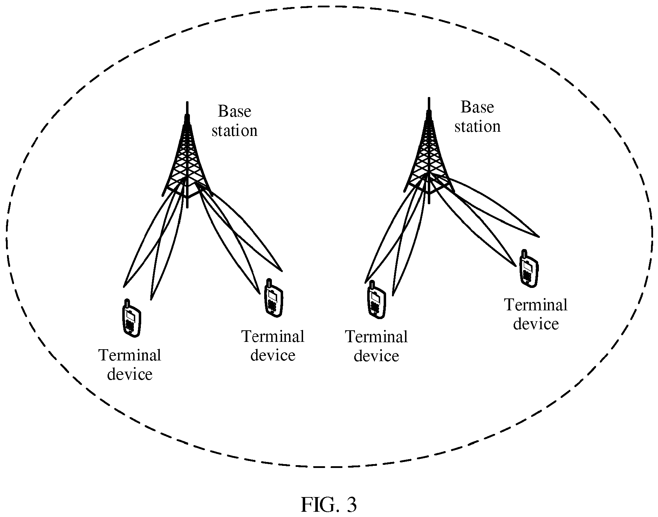

FIG. 3 is a schematic diagram of an application scenario according to an embodiment of this application. FIG. 3 includes a plurality of base stations, each base station covers one or more cells, each cell is covered by a plurality of beams of the base station, and each cell includes a plurality of terminal devices. The base station receives, by using an uplink beam, a preamble sent by each terminal device, and sends a downlink signal to the terminal device by using a downlink beam corresponding to the preamble.

The following describes the technical solutions provided in the embodiments of this application with reference to the accompanying drawings. In the following description process, an example in which the technical solutions provided in this application are applied to the application scenario shown in FIG. 3 is used, and an example in which a source network device is a source base station and a target network device is a target base station is used.

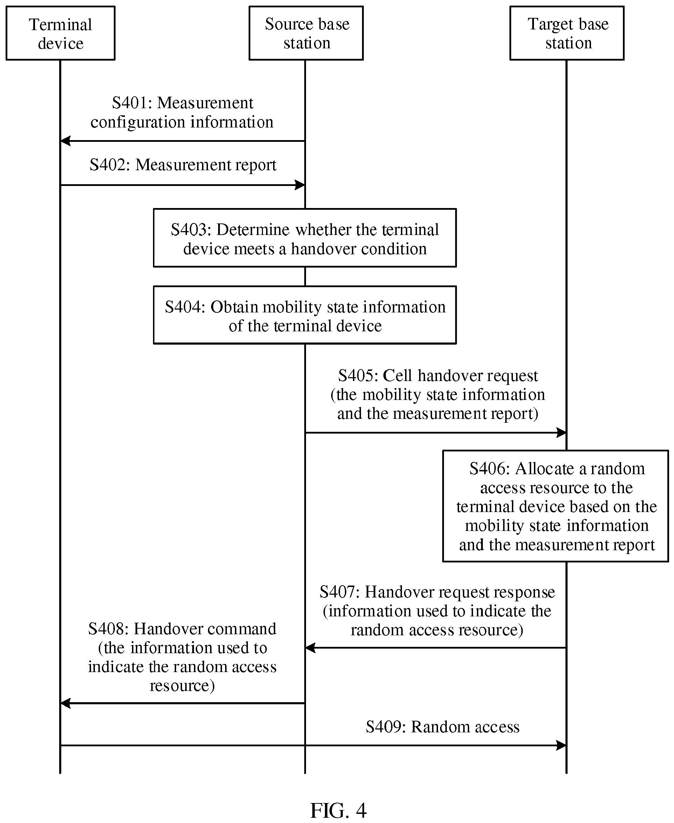

Referring to FIG. 4, an embodiment of this application provides a random access resource allocation method. A flowchart of the method is briefly described as follows:

S401: A source base station sends measurement configuration information to a terminal device.

For the measurement configuration information in step S401, refer to the measurement configuration information in the first step in FIG. 2. Details are not described herein again.

S402: The terminal device sends a measurement report to the source base station based on the received measurement configuration information.

In this embodiment of this application, the measurement report sent by the terminal device to the source base station includes beam information of a target base station that is obtained by the terminal device through measurement, for example, beam information of a downlink beam that is measured by the terminal device and that can be used by the target base station to send a downlink signal to the terminal device. The beam information includes but is not limited to an antenna logical port, a panel, a channel state information-reference signal (Channel State Information-Reference Signal, CSI-RS), and the like. In this embodiment of this application, the downlink beam included in the beam information may be referred to as a reporting beam.

In this embodiment of this application, the measurement report herein is a current measurement report of the terminal device, in other words, a measurement report reported after the terminal device receives the measurement configuration information.

S403: The source base station determines, based on the received measurement report, whether the terminal device meets a handover condition.

In this embodiment of this application, when the handover condition is known, the source base station determines whether a measurement result in the received measurement report meets the handover condition, and if the measurement result meets the handover condition, determines that the terminal device needs to be handed over.

S404: The source base station obtains mobility state information of the terminal device.

In this embodiment of this application, the mobility state information of the terminal device includes a mobility state, a mobility speed, or a mobility direction. The mobility speed may be a mobility speed of the terminal device or a speed at which the terminal device switches a downlink beam. The mobility state may be a high mobility state, a medium mobility state, or a normal mobility state. The high mobility state means that the terminal device moves at a high speed. The medium mobility state means that the terminal device moves at a medium speed. The normal mobility state means that the terminal device moves at a low speed. How to define the high speed, the medium speed, and the low speed is described below.

In this embodiment of this application, implementations in which the source base station obtains the mobility state information of the terminal device include but are not limited to the following two implementations, which are separately described below.

In a first implementation, the terminal device obtains the mobility state information of the terminal device. For example, the terminal device obtains the mobility speed by using a speed sensor or a global positioning system (Global Positioning System, GPS), obtains the mobility direction by using a direction sensor or an angle sensor, and then sends the obtained mobility state information to the source base station.

In a second implementation, the source base station determines the mobility state information of the terminal device, and an implementation includes but is not limited to the following two implementations, which are separately described below.

In manner A, the source base station obtains the mobility state information of the terminal device based on a quantity of downlink beams switched by the terminal device within predetermined duration.

In this embodiment of this application, the predetermined duration may be a time period that is set forward by the source base station based on a current time point, and the current time point may be a time point at which the source base station determines whether the terminal device meets the handover condition, or may be a time point at which the source base station receives a trigger event for the measurement report. The current time point herein may alternatively be a time point at which the source base station is triggered to obtain the mobility state information of the terminal device. The quantity of downlink beams switched by the terminal device within the predetermined duration may be understood as a quantity of downlink beams traversed in a range from a first position to a second position when the terminal device moves from the first position to the second position in a time period.

In this embodiment of this application, the source base station may always obtain, after establishing a communication link to the terminal device, the quantity of downlink beams switched by the terminal device, or obtain, based on a specific period, the quantity of downlink beams switched by the terminal device. Alternatively, the source base station may start obtaining, when sending the measurement configuration information to the terminal device, the quantity of downlink beams switched by the terminal device, to use the quantity when needing to obtain the mobility state of the terminal device. For example, when determining whether the terminal device meets the handover condition, the source base station determines, in the obtained quantity of downlink beams switched by the terminal device, a quantity of downlink beams switched by the terminal device in a time period prior to the current time point, so that switching duration of the terminal device can be effectively reduced.

In this embodiment of this application, if the quantity of downlink beams switched by the terminal device within the predetermined duration is greater than a first predetermined quantity, the source base station determines that the terminal device is in the high mobility state; if the quantity of downlink beams switched by the terminal device within the predetermined duration is less than or equal to a first predetermined quantity and is greater than a second predetermined quantity, the source base station determines that the terminal device is in the medium mobility state; or if the quantity of downlink beams switched by the terminal device within a predetermined time period is less than or equal to a second predetermined quantity, the source base station determines that the terminal device is in the normal mobility state. It may be learned that the high mobility state, the medium mobility state, and the normal mobility state in this embodiment of this application are relative concepts, and are not absolute.

Alternatively, if the quantity is greater than or equal to a first predetermined quantity, the source network device obtains that the mobility state information of the terminal device is the high mobility state; if the quantity is greater than or equal to a second predetermined quantity and is less than a first predetermined quantity, the source network device obtains that the mobility state information of the terminal device is the medium mobility state; or if the quantity is less than a second predetermined quantity, the source network device obtains that the mobility state information of the terminal device is the normal mobility state. Alternatively, if the quantity is greater than or equal to a first predetermined quantity, the source network device obtains that the mobility state information of the terminal device is the high mobility state; if the quantity is greater than a second predetermined quantity and is less than a first predetermined quantity, the source network device obtains that the mobility state information of the terminal device is the medium mobility state; or if the quantity is less than or equal to a second predetermined quantity, the source network device obtains that the mobility state information of the terminal device is the normal mobility state. Alternatively, if the quantity is greater than a first predetermined quantity, the source network device obtains that the mobility state information of the terminal device is the high mobility state; if the quantity is greater than or equal to a second predetermined quantity and is less than or equal to a first predetermined quantity, the source network device obtains that the mobility state information of the terminal device is the medium mobility state; or if the quantity is less than a second predetermined quantity, the source network device obtains that the mobility state information of the terminal device is the normal mobility state.

In this embodiment of this application, both the first predetermined quantity and the second predetermined quantity may be set based on a requirement on a handover success rate of the terminal device and/or a random access resource that can be provided by the target base station. For example, if the handover success rate of the terminal device needs to be ensured or the random access resource of the target base station is sufficient, the source base station may set the first predetermined quantity and the second predetermined quantity to be relatively small. For example, the first predetermined quantity may be 5, and the second predetermined quantity may be 2. If the handover success rate of the terminal device needs to be ensured and the random access resource of the target base station is sufficient, the source base station may set the first predetermined quantity to be smaller. For example, the first predetermined quantity may be 2. If no requirement is imposed on the handover success rate of the terminal device or the random access resource of the target base station is insufficient, the source base station may set the first predetermined quantity and the second predetermined quantity to be relatively large. For example, the first predetermined quantity may be 10, and the second predetermined quantity may be 5. An example in which the first predetermined quantity is 10 and the second predetermined quantity is 5 is used. If the quantity of downlink beams switched by the terminal device within the predetermined duration is greater than 10, the source base station determines that the terminal device is in the high mobility state; if the quantity of downlink beams switched by the terminal device within the predetermined duration is less than or equal to 10 and is greater than 5, the source base station determines that the terminal device is in the medium mobility state; and if the quantity of downlink beams switched by the terminal device within the predetermined duration is less than or equal to 5, the source base station determines that the terminal device is in the normal mobility state.

The first predetermined quantity and the second predetermined quantity may alternatively be set based on another actual requirement. This is not limited in this embodiment of this application.

In manner B, the source base station obtains the mobility state information of the terminal device based on a distance between the terminal device and the source base station and a quantity of downlink beams switched by the terminal device within predetermined duration.

In this embodiment of this application, refer to manner A for the predetermined duration and the quantity of downlink beams switched by the terminal device within the predetermined duration. Details are not described herein again.

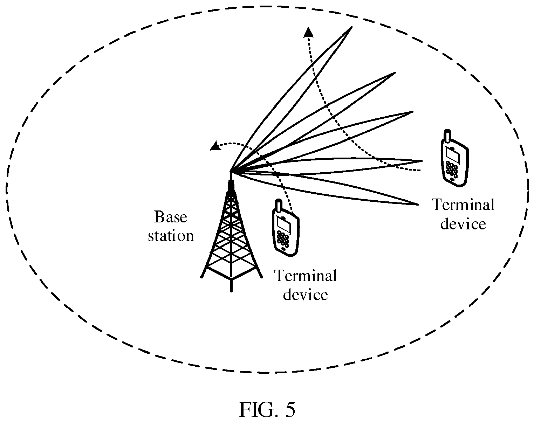

In this embodiment of this application, referring to FIG. 5, the distance between the terminal device and the source base station is first determined, and the quantity that is of the downlink beams switched by the terminal device within the predetermined duration and that is used to classify a mobility state of the terminal device is determined based on the distance between the terminal device and the source base station. For example, when the terminal device is relatively close to the source base station, it is determined that there may be a larger quantity of downlink beams switched by the terminal device within the predetermined duration. When the terminal device is relatively far away from the source base station, it is determined that there may be a smaller quantity of downlink beams switched by the terminal device within the predetermined duration.

In this embodiment of this application, when the terminal device is relatively close to the source base station, if the quantity of downlink beams switched by the terminal device within the predetermined duration is greater than a first predetermined quantity, the source base station determines that the terminal device is in the high mobility state; if the quantity of downlink beams switched by the terminal device within the predetermined duration is less than or equal to a first predetermined quantity and is greater than a second predetermined quantity, the source base station determines that the terminal device is in the medium mobility state; or if the quantity of downlink beams switched by the terminal device within the predetermined duration is less than or equal to a second predetermined quantity, the source base station determines that the terminal device is in the normal mobility state. When the terminal device is relatively far away from the source base station, if the quantity of downlink beams switched by the terminal device within the predetermined duration is greater than a third predetermined quantity, the source base station determines that the terminal device is in the high mobility state; if the quantity of downlink beams switched by the terminal device within the predetermined duration is less than or equal to a third predetermined quantity and is greater than a fourth predetermined quantity, the source base station determines that the terminal device is in the medium mobility state; or if the quantity of downlink beams switched by the terminal device within the predetermined duration is less than or equal to a fourth predetermined quantity, the source base station determines that the terminal device is in the normal mobility state. The third predetermined quantity is less than the first predetermined quantity.

Alternatively, in this embodiment of this application, when the terminal device is relatively close to the source base station, if the quantity is greater than or equal to a first predetermined quantity, the source network device obtains that the mobility state information of the terminal device is the high mobility state; if the quantity is greater than or equal to a second predetermined quantity and is less than a first predetermined quantity, the source network device obtains that the mobility state information of the terminal device is the medium mobility state; or if the quantity is less than a second predetermined quantity, the source network device obtains that the mobility state information of the terminal device is the normal mobility state. When the terminal device is relatively far away from the source base station, if the quantity is greater than or equal to a third predetermined quantity, the source network device obtains that the mobility state information of the terminal device is the high mobility state; if the quantity is greater than or equal to a fourth predetermined quantity and is less than a third predetermined quantity, the source network device obtains that the mobility state information of the terminal device is the medium mobility state; or if the quantity is less than a fourth predetermined quantity, the source network device obtains that the mobility state information of the terminal device is the normal mobility state.

Alternatively, in this embodiment of this application, when the terminal device is relatively close to the source base station, if the quantity is greater than or equal to a first predetermined quantity, the source network device obtains that the mobility state information of the terminal device is the high mobility state; if the quantity is greater than a second predetermined quantity and is less than a first predetermined quantity, the source network device obtains that the mobility state information of the terminal device is the medium mobility state; or if the quantity is less than or equal to a second predetermined quantity, the source network device obtains that the mobility state information of the terminal device is the normal mobility state. When the terminal device is relatively far away from the source base station, if the quantity is greater than or equal to a third predetermined quantity, the source network device obtains that the mobility state information of the terminal device is the high mobility state; if the quantity is greater than a fourth predetermined quantity and is less than a third predetermined quantity, the source network device obtains that the mobility state information of the terminal device is the medium mobility state; or if the quantity is less than or equal to a fourth predetermined quantity, the source network device obtains that the mobility state information of the terminal device is the normal mobility state.

Alternatively, in this embodiment of this application, when the terminal device is relatively close to the source base station, if the quantity is greater than a first predetermined quantity, the source network device obtains that the mobility state information of the terminal device is the high mobility state; if the quantity is greater than or equal to a second predetermined quantity and is less than or equal to a first predetermined quantity, the source network device obtains that the mobility state information of the terminal device is the medium mobility state; or if the quantity is less than a second predetermined quantity, the source network device obtains that the mobility state information of the terminal device is the normal mobility state. When the terminal device is relatively far away from the source base station, if the quantity is greater than a third predetermined quantity, the source network device obtains that the mobility state information of the terminal device is the high mobility state; if the quantity is greater than or equal to a fourth predetermined quantity and is less than or equal to a third predetermined quantity, the source network device obtains that the mobility state information of the terminal device is the medium mobility state; or if the quantity is less than a fourth predetermined quantity, the source network device obtains that the mobility state information of the terminal device is the normal mobility state.

In this embodiment of this application, the first predetermined quantity and the second predetermined quantity may be determined based on the distance between the terminal device and the source base station, a requirement on a handover success rate of the terminal device, and the random access resource that can be provided by the target base station. For example, when the distance between the terminal device and the source base station is determined, the first predetermined quantity and the second predetermined quantity are determined based on the requirement on the handover success rate of the terminal device and/or the random access resource that can be provided by the target base station. If the handover success rate of the terminal device needs to be ensured or the random access resource of the target base station is sufficient, the source base station may set the first predetermined quantity and the second predetermined quantity to be relatively small. For example, the first predetermined quantity may be 5, and the second predetermined quantity may be 2. If the handover success rate of the terminal device needs to be ensured and the random access resource of the target base station is sufficient, the source base station may set the first predetermined quantity to be smaller. For example, the first predetermined quantity may be 2. If no requirement is imposed on the handover success rate of the terminal device or the random access resource of the target base station is insufficient, the first predetermined quantity and the second predetermined quantity may be set to be relatively large. For example, the first predetermined quantity may be 10, and the second predetermined quantity may be 5.

The third predetermined quantity and the fourth predetermined quantity may be set with reference to a setting manner of the first predetermined quantity and the second predetermined quantity. Details are not described herein again.

In this embodiment of this application, S404 may be performed before step S403, or may be performed after step S403, or S404 and step S403 may be synchronously performed. In other words, the source base station may obtain the mobility state information of the terminal device before performing determining, so that the mobility state information is used when the random access resource is allocated to the terminal device for cell handover. Alternatively, the source base station may obtain the mobility state information of the terminal device after performing determining, in other words, obtain the mobility state information of the terminal device when the random access resource needs to be allocated to the terminal device. Alternatively, the source base station may obtain the mobility state information of the terminal device while performing determining. This is not limited in this embodiment of this application.

S405: The source base station sends a cell handover request to the target base station, where the cell handover request includes the mobility state information of the terminal device and a measurement report of the terminal device.

In this embodiment of this application, when needing to perform cell handover, the terminal device may send the mobility state information of the terminal device to the target base station by using the cell handover request, to be used by the target base station to allocate, to the terminal device, a non-contention-based dedicated random access resource corresponding to beam information reported by the terminal device.

In this embodiment of this application, the mobility state information of the terminal device may be at least one of a mobility speed, a mobility direction, and a mobility state. The mobility speed may be a mobility speed of the terminal device, or may be a speed at which the terminal device switches a downlink beam within the predetermined duration. The mobility state may be the high mobility state, the low mobility state, or the normal mobility state.

In this embodiment of this application, the source base station may send the cell handover request to the target base station through an X2 interface.

In this embodiment of this application, the mobility state information of the terminal device may be a direct result of the mobility state determined by the source base station based on the quantity of downlink beams switched by the terminal device within the predetermined time period, or indication information used to represent the determined direct result; or may be a direct result of the mobility state of the terminal device that is determined by the source base station based on the distance between the terminal device and the source base station and the quantity of downlink beams switched by the terminal device within the predetermined duration, or may be indication information used to represent the determined direct result. The indication information may be represented by using a number, a character, or a combination of a number and a character. This is not limited in this embodiment of this application.

In this embodiment of this application, the measurement report herein is not equivalent to the "measurement report" in step S402. The measurement report herein includes the current measurement report of the terminal device; or the measurement report includes the current measurement report of the terminal device and a historical measurement report of the terminal device, where the current measurement report is equivalent to the measurement report in step S402, and the historical measurement report is a measurement report reported by the terminal device for performing a handover operation before the current handover.

In this embodiment of this application, when the target base station obtains the measurement report of the terminal device in another manner instead of by using the cell handover request, the cell handover request may include only the mobility state information of the terminal device.

In this embodiment of this application, the source base station may send the mobility state information and the measurement report of the terminal device to the target base station at the same time by using the cell handover request, or may first send the mobility state information of the terminal device by using the cell handover request, and then send the measurement report of the terminal device to the target base station by using the cell handover request, or may first send the measurement report of the terminal device to the target base station by using the cell handover request, and then send the mobility state information of the terminal device by using the cell handover request. This is not limited in this embodiment of this application.

In this embodiment of this application, a manner in which the target base station obtains the mobility state information of the terminal device may be as follows: After obtaining the mobility state information of the terminal device, the source base station sends the mobility state information of the terminal device to the target base station by using the cell handover request. Alternatively, the source base station may send, to the target base station, the obtained quantity of downlink beams switched by the terminal device within the predetermined duration, and the target base station determines the mobility state of the terminal device based on the quantity of downlink beams switched by the terminal device within the predetermined duration. Alternatively, the source base station sends, to the target base station, the obtained distance between the terminal device and the source base station and the obtained quantity of downlink beams switched by the terminal device within the predetermined duration, and the target base station determines the mobility state of the terminal device based on the distance between the terminal device and the source base station and the quantity of downlink beams switched by the terminal device within the predetermined duration. This is not limited in this embodiment of this application.

S406: The target base station allocates the random access resource to the terminal device based on the mobility state information and the measurement report of the terminal device.

In this embodiment of this application, the measurement report includes the beam information of the target base station that is obtained by the terminal device through measurement. Therefore, the target base station can allocate the random access resource to the terminal device based on the mobility state information of the terminal device and the beam information that is included in the measurement report.

In this embodiment of this application, when the measurement report in step S405 includes different content, a process in which the target base station allocates the random access resource to the terminal device based on the mobility state information and the measurement report of the terminal device is also different. The following describes different processes.

In a first process, the measurement report includes the current measurement report.

The target base station allocates, to the terminal device based on the mobility state information, a random access resource corresponding to a beam indicated by beam information included in the current measurement report, and a random access resource corresponding to n beams related to the beam, where n is an integer, and n is obtained based on the mobility state information and a random access resource that can be provided by the target base station.

In this embodiment of this application, "related" may mean that a beam is neighboring to the beam indicated by the beam information, or may mean that a beam is neighboring to and is spaced by n beams from the beam indicated by the beam information. For example, if n is 1, the beam may be a beam neighboring to the beam indicated by the beam information, or may be a beam that is spaced by one beam from the beam indicated by the beam information.

In this embodiment of this application, when the terminal device is in a different mobility state, a quantity of random access resources allocated by the target base station to the terminal device is also different. Details are as follows:

For example, if the terminal device is in the normal mobility state, n may be 1; if the terminal device is in the normal mobility state and the random access resource of the target base station is sufficient, n may be 2; or if the terminal device is in the normal mobility state and the random access resource of the target base station is insufficient, n may be 0. Specifically, n being 1 is used as an example. The target base station not only allocates, to the terminal device, random access resources corresponding to beams 0 and 1 in reported beams, but also allocates, to the terminal device, a random access resource corresponding to a beam 2 neighboring to the beam 0 and the beam 1.

If the terminal device is in the medium mobility state, n may be 2; if the terminal device is in the medium mobility state and the random access resource of the target base station is sufficient, n may be 3; or if the terminal device is in the medium mobility state and the random access resource of the target base station is insufficient, n may be 1. Specifically, n being 2 is used as an example. The target base station not only allocates, to the terminal device, random access resources corresponding to a beam 0 and a beam 1 in reported beams, but also allocates, to the terminal device, random access resources corresponding to a beam 2 and a beam 3 related to the beam 0 and the beam 1.

If the terminal device is in the high mobility state, n may be 3; if the terminal device is in the high mobility state and the random access resource of the target base station is sufficient, n may be 4; or if the terminal device is in the high mobility state and the random access resource of the target base station is insufficient, n may be 2. Specifically, n being 3 is used as an example. The target base station not only allocates, to the terminal device, random access resources corresponding to a beam 0 and a beam 1 in reported beams, but also allocates, to the terminal device, random access resources corresponding to a beam 2, a beam 3, and a beam 4 related to the beam 0 and the beam 1.

In this embodiment of this application, when the terminal device is in a different mobility state, the target base station allocates a different quantity of random access resources to the terminal device. A manner in which the target base station allocates the random access resource to the terminal device is more flexible, and an access failure probability of the terminal device in a handover process can be effectively reduced, or the target base station can be effectively prevented from providing excessive random access resources, thereby reducing waste of resources while ensuring the handover success rate of the terminal device, to improve resource utilization.

In a second process, the measurement report includes the current measurement report and the historical measurement report.

The target base station obtains the mobility direction of the terminal device based on the current measurement report and the historical measurement report; and
the target base station allocates the random access resource to the terminal device based on the mobility state information, the mobility direction, and the beam information that is included in the current measurement report.

In this embodiment of this application, still referring to FIG. 1, an example in which the beam information in the current measurement report of the terminal device is a beam 3 and a beam 4 is used, and an example in which beam information in the historical measurement report is a beam 1 and a beam 2 is used. In this case, the source base station may determine, based on distribution of the beam 1, the beam 2, the beam 3, the beam 4, and beams of the target base station, the mobility direction of the terminal device, for example, a direction shown by an arrow in FIG. 1. The target base station further obtains the mobility direction of the terminal device on the basis of obtaining the mobility state of the terminal device, and therefore can more accurately allocate the random access resource to the terminal device. For example, when learning of the mobility state and the mobility direction of the terminal device, and the beam information, the target base station allocates, to the terminal device, random access resources corresponding to the beam 3 and the beam 4 and a random access resource corresponding to a beam 5 neighboring to the beam 3 and the beam 4, rather than a random access resource corresponding to a beam 0 neighboring to the beam 1 and the beam 2; or allocates, to the terminal device, random access resources of the beam 4 and a beam 5 neighboring to the beam 4; or allocates, to the terminal device, a random access resource of a beam 5 neighboring to the beam 4. Therefore, the random access resource can be more accurately allocated to the terminal device by using this implementation.

In this embodiment of this application, the random access resource includes at least one of a preamble, a time domain resource, a frequency domain resource, and a random access time.

The random access time includes a time density of random access, for example, K subframes in every N frames being used for random access, and includes a start time point and an end time point of the random access resource, or a start time point and duration of the random access resource. The start time point or the end time point includes at least one of a frame, a subframe, a slot, a mini-slot (mini-slot), and a number of an orthogonal frequency division multiplexing (Orthogonal Frequency Division Multiplexing, OFDM) symbol. One frame, subframe, mini-slot, or slot includes a plurality of OFDM symbols.

S407: The target base station sends a handover request response to the source base station, where the handover request response includes information used to indicate the random access resource allocated by the target base station to the terminal device.

S408: The source base station sends a handover command to the terminal device based on the received handover request response, where the handover command includes the information used to indicate the random access resource allocated by the target base station to the terminal device.

S409: The terminal device performs random access based on the allocated random access resource.

In this embodiment of this application, after allocating the random access resource to the terminal device, the target base station sends the handover request response to the source base station. The handover request response includes the information used to indicate the random access resource allocated by the target base station to the terminal device. Then, the source base station sends, to the terminal device, the handover command including the information used to indicate the random access resource allocated by the target base station to the terminal device. When receiving the handover command, the terminal device obtains, based on the information included in the handover command, the random access resource allocated by the target base station to the terminal device, and performs random access based on the allocated random access resource.

For example, the target base station allocates the random access resources corresponding to the beam 3, the beam 4, and the beam 5 to the terminal device. In this case, the terminal device may randomly select one random access resource from the three random access resources. For example, the random access resource corresponding to the beam 3 is selected. The terminal device sends a preamble corresponding to the beam 3 to the target base station by using an uplink beam, and the target base station may send a downlink signal to the terminal device by using the beam 3.

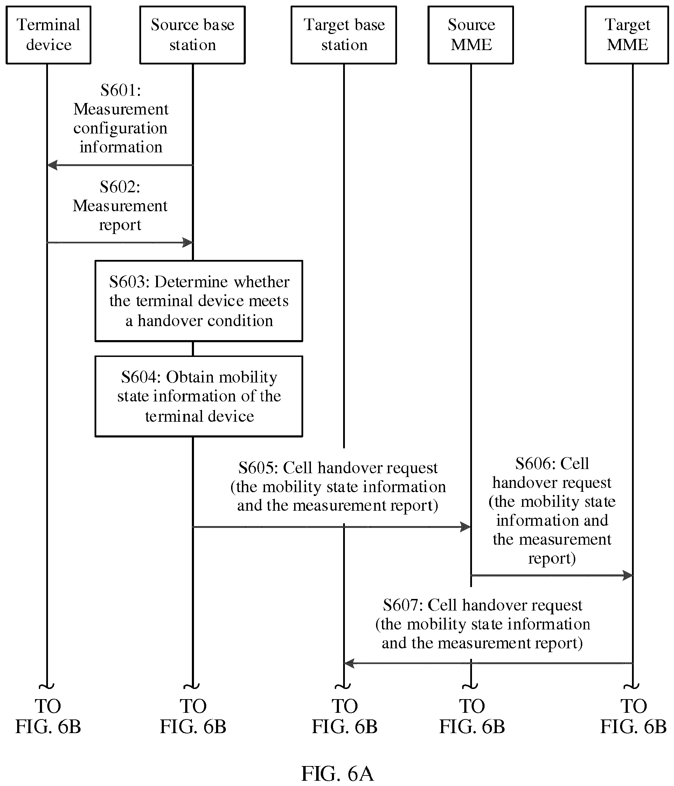

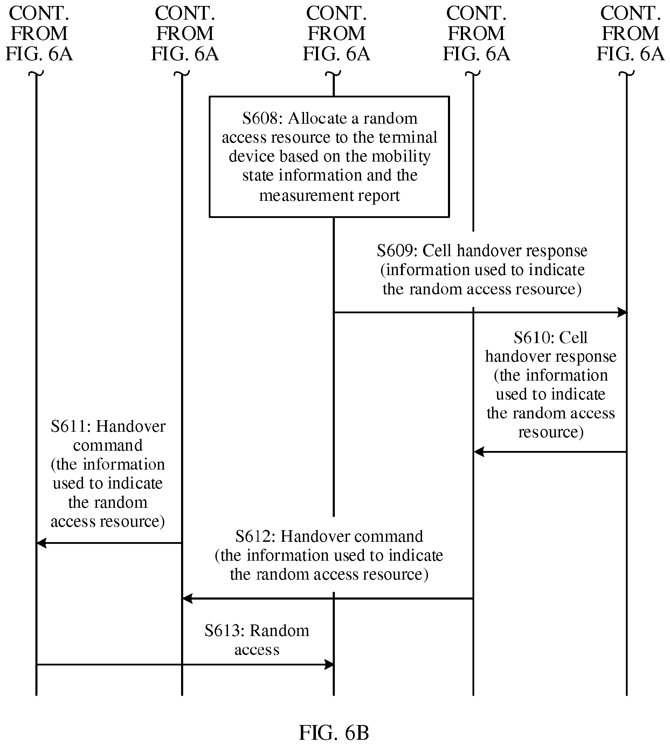

Referring to FIG. 6A and FIG. 6B, an embodiment of this application provides a random access resource allocation method. A procedure of the method is described as follows:
S601: A source base station sends measurement configuration information to a terminal device.
S602: The terminal device sends a measurement report to the source base station based on the received measurement configuration information.
S603: The source base station determines, based on the received measurement report, whether the terminal device meets a handover condition.
S604: The source base station obtains mobility state information of the terminal device.
S605: The source base station sends a cell handover request to a source mobility management entity MME, where the cell handover request includes the mobility state information of the terminal device and a measurement report of the terminal device.
S606: The source MME sends the cell handover request to a target MME.
S607: The target MME sends the cell handover request to a target base station.
S608: The target base station allocates a random access resource to the terminal device based on a mobility state and the measurement report.
S609: The target base station sends a handover request response to the target MME, where the handover request response includes information used to indicate the random access resource allocated by the target base station to the terminal device.
S610: The target MME sends the handover request response to the source MME.
S611: The source MME sends a handover command to the source base station based on the received handover request response, where the handover command includes the information used to indicate the random access resource allocated by the target base station to the terminal device.
S612: The source base station sends the handover command to the terminal device.
S613: The terminal device performs random access based on the allocated random access resource.

In this embodiment of this application, for implementations of step S601 to step S604, refer to the implementations of step S401 to S404 in FIG. 4. Implementations in which the source base station obtains the mobility state information of the terminal device include but are not limited to the following two implementations:

In a first implementation, the terminal device obtains the mobility state information of the terminal device. For example, the terminal device obtains a mobility speed by using a speed sensor or a global positioning system (Global Positioning System, GPS), obtains a mobility direction by using a direction sensor or an angle sensor, and then sends the obtained mobility state information to the source base station.

In a second implementation, the source base station determines the mobility state information of the terminal device. That the source base station determines the mobility state information of the terminal device may be implemented with reference to implementations of manner A and manner B in step S404. Details are not described herein again.

After the source base station determines the mobility state of the terminal device, the source base station needs to send the cell handover request to the target base station, in other words, performs the process of step S603 to step S605. To be specific, the cell handover request is sent, through an S1-MME interface, by the source base station to the source MME corresponding to the source base station, is forwarded by the source MME to the target MME corresponding to the target base station, and then is sent by the target MME to the target base station. For information included in the cell handover request, refer to content included in the cell handover request in step S405 in FIG. 4. Details are not described herein again.

In this embodiment of this application, after step S606, the target base station allocates the random access resource to the terminal device based on the mobility state information of the terminal device and the measurement report of the terminal device. Details are as follows:

In this embodiment of this application, the measurement report includes beam information of the target base station that is obtained by the terminal device through measurement. Therefore, the target base station can allocate, to the terminal device based on the mobility state information of the terminal device and the beam information that is included in the measurement report, a random access resource corresponding to a reported beam.

In this embodiment of this application, when the measurement report in step S605 includes different content, a process in which the target base station allocates the random access resource to the terminal device based on the mobility state information and the measurement report of the terminal device is also different. The following describes different processes.

In a first process, the measurement report includes a current measurement report.

The target base station allocates, to the terminal device based on the mobility state information, a random access resource corresponding to a beam indicated by beam information included in the current measurement report, and a random access resource corresponding to n beams related to the beam, where n is an integer, and n is obtained based on the mobility state information and a random access resource that can be provided by the target base station.

In this embodiment of this application, "related" may mean that a beam is neighboring to the beam indicated by the beam information, or may mean that a beam is neighboring to and is spaced by n beams from the beam indicated by the beam information. For example, if n is 1, the beam may be a beam neighboring to the beam indicated by the beam information, or may be a beam that is spaced by one beam from the beam indicated by the beam information.

In this embodiment of this application, when the terminal device is in a different mobility state, a quantity of random access resources allocated by the target base station to the terminal device is also different. Details are as follows:

For example, if the terminal device is in a normal mobility state, n may be 1; if the terminal device is in a normal mobility state and the random access resource of the target base station is sufficient, n may be 2; or if the terminal device is in a normal mobility state and the random access resource of the target base station is insufficient, n may be 0. Specifically, n being 1 is used as an example. The target base station not only allocates, to the terminal device, random access resources corresponding to beams 0 and 1 in reported beams, but also allocates, to the terminal device, a random access resource corresponding to a beam 2 neighboring to the beam 0 and the beam 1.

If the terminal device is in a medium mobility state, n may be 2; if the terminal device is in a medium mobility state and the random access resource of the target base station is sufficient, n may be 3; or if the terminal device is in a medium mobility state and the random access resource of the target base station is insufficient, n may be 1. Specifically, n being 2 is used as an example. The target base station not only allocates, to the terminal device, random access resources corresponding to beams 0 and 1 in reported beams, but also allocates, to the terminal device, random access resources corresponding to a beam 2 and a beam 3 that are related to the beam 0 and the beam 1.

If the terminal device is in a high mobility state, n may be 3; if the terminal device is in a high mobility state and the random access resource of the target base station is sufficient, n may be 4; or if the terminal device is in a high mobility state and the random access resource of the target base station is insufficient, n may be 2. Specifically, n being 3 is used as an example. The target base station not only allocates, to the terminal device, random access resources corresponding to a beam 0 and a beam 1 in reported beams, but also allocates, to the terminal device, random access resources corresponding to a beam 2, a beam 3, and a beam 4 that are related to the beam 0 and the beam 1.

In this embodiment of this application, when the terminal device is in a different mobility state, the target base station allocates a different quantity of random access resources to the terminal device. A manner in which the target base station allocates the random access resource to the terminal device is more flexible, and an access failure probability of the terminal device in a handover process can be effectively reduced, or the target base station can be effectively prevented from providing excessive random access resources, thereby reducing waste of resources while ensuring a handover success rate of the terminal device, to improve resource utilization.

In a second process, the measurement report includes a current measurement report and a historical measurement report.

The target base station obtains the mobility direction of the terminal device based on the current measurement report and the historical measurement report; and
the target base station allocates the random access resource to the terminal device based on the mobility state information, the mobility direction, and beam information that is included in the current measurement report.

In this embodiment of this application, still referring to FIG. 1, an example in which the beam information in the current measurement report of the terminal device is a beam 3 and a beam 4 is used, and an example in which beam information in the historical measurement report is a beam 1 and a beam 2 is used. In this case, the source base station may determine, based on distribution of the beam 1, the beam 2, the beam 3, the beam 4, and beams of the target base station, the mobility direction of the terminal device, for example, a direction shown by an arrow in FIG. 1. The target base station further obtains the mobility direction of the terminal device on the basis of obtaining the mobility state of the terminal device, and therefore can more accurately allocate the random access resource to the terminal device. For example, when learning of the mobility state and the mobility direction of the terminal device, and the beam information, the target base station allocates, to the terminal device, the random access resources corresponding to the beam 3 and the beam 4 and a random access resource corresponding to a beam 5 neighboring to the beam 3 and the beam 4, rather than a random access resource corresponding to a beam 0 neighboring to the beam 1 and the beam 2; or allocates, to the terminal device, random access resources of the beam 4 and a beam 5 neighboring to the beam 4; or allocates, to the terminal device, a random access resource of a beam 5 neighboring to the beam 4. Therefore, the random access resource can be more accurately allocated to the terminal device by using this implementation.

After allocating the random access resource to the terminal device, the target base station sends the handover request response to the target MME, where the handover request response includes the information used to indicate the random access resource allocated by the target base station to the terminal device, and the target MME sends the handover request response to the source MME. Then, the source MME sends, to the source base station, the handover command including the information used to indicate the random access resource allocated by the target base station to the terminal device, and the source base station sends the handover command to the terminal device. When receiving the handover command, the terminal device obtains, based on the information included in the handover command, the random access resource allocated by the target base station to the terminal device, and performs random access based on the allocated random access resource.

A cell handover algorithm shown in FIG. 5 and the random access resource allocation method shown in FIG. 6A and FIG. 6B are applicable to a case of FIG. 3 in which a plurality of base stations are included, in other words, a case of random access resource allocation for handover between cells of different base stations. The following provides a random access resource allocation method applicable to handover between different cells of a same base station. In addition, an example in which a source cell network device is a source cell base station, and a target cell network device is a target cell base station is used.

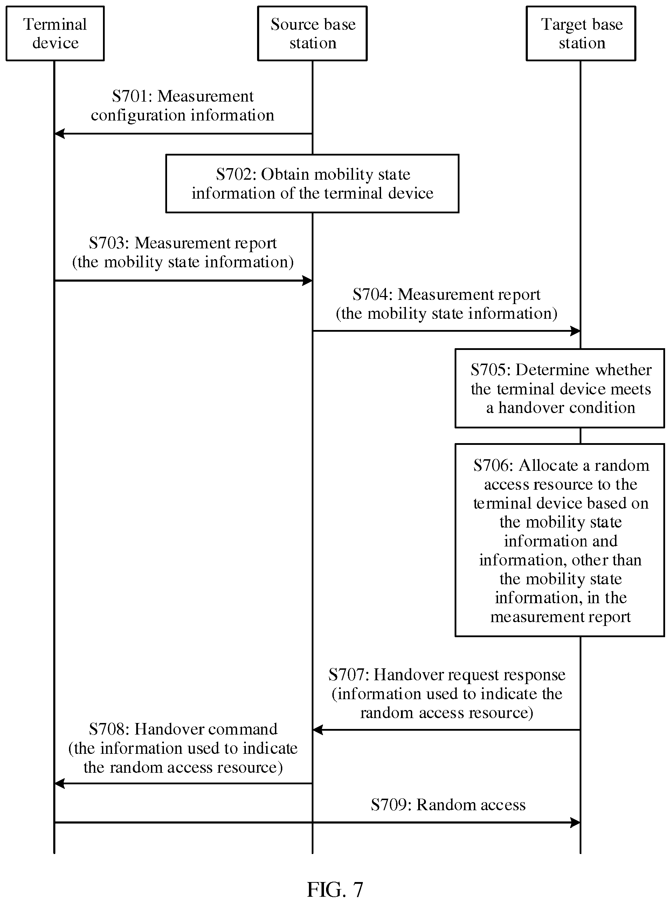

Referring to FIG. 7, an embodiment of this application provides a random access resource allocation method. A procedure of the method is described as follows:
S701: A source cell base station sends a measurement configuration information to a terminal device.
S702: The source cell base station obtains mobility state information of the terminal device.
S703: The terminal device sends a measurement report to the source cell base station, where the measurement report includes the mobility state information of the terminal device.
S704: The source cell base station sends the measurement report to a target cell base station, where the measurement report includes the mobility state information of the terminal device.
S705: The target cell base station determines, based on the received measurement report, whether the terminal device meets a handover condition.
S706: The target cell base station allocates a random access resource to the terminal device based on the mobility state information and information, other than the mobility state information, in the measurement report.
S707: The target cell base station sends a handover request response to the source cell base station, where the handover request response includes information used to indicate the random access resource allocated by the target cell base station to the terminal device.
S708: The source cell base station sends a handover command to the terminal device based on the received handover request response, where the handover command includes the information used to indicate the random access resource allocated by the target cell base station to the terminal device.
S709: The terminal device performs random access based on the allocated random access resource.

In this embodiment of this application, the source cell base station and the target cell base station are logical concepts, and are different communications units supported by a same hardware apparatus of a same base station.

In this embodiment of this application, for implementations of step S701 and step S702, refer to the implementations of step S401 and step S404 in FIG. 4. Details are not described herein again.

In this embodiment of this application, after step S702, the terminal device sends the measurement report to the source cell base station. The measurement report includes the mobility state information of the terminal device. After receiving the measurement report, the source cell base station sends the measurement report to the target cell base station. After receiving the measurement report sent by the terminal device, the target cell base station allocates the random access resource to the terminal device based on the mobility state information of the terminal device and the information, other than a mobility state information, in the measurement report.

In this embodiment of this application, the source cell base station may alternatively send the mobility state information of the terminal device to the target cell base station by using other information. In this case, the measurement report does not need to include the mobility state information of the terminal device. This is not limited in this embodiment of this application.

In this embodiment of this application, the measurement report includes the mobility state information of the terminal device and beam information of the target cell base station that is obtained by the terminal device through measurement. Therefore, the target cell base station can allocate, to the terminal device based on the mobility state information of the terminal device and the beam information that is included in the measurement report, a random access resource corresponding to a reported beam.

In this embodiment of this application, when the measurement report in step S703 includes different content, a process in which the target cell base station allocates the random access resource to the terminal device based on the mobility state information and the information, other than the mobility state information, in the measurement report is also different. The following describes different processes.

In a first process, the measurement report includes a current measurement report.

The target cell base station allocates, to the terminal device based on the mobility state information, a random access resource corresponding to a beam indicated by beam information included in the current measurement report, and a random access resource corresponding to n beams related to the beam, where n is an integer, and n is obtained based on the mobility state information and a random access resource that can be provided by the target cell base station.

In this embodiment of this application, "related" may mean that a beam is neighboring to the beam indicated by the beam information, or may mean that a beam is neighboring to and is spaced by n beams from the beam indicated by the beam information. For example, if n is 1, the beam may be a beam neighboring to the beam indicated by the beam information, or may be a beam that is spaced by one beam from the beam indicated by the beam information.

In this embodiment of this application, when the terminal device is in a different mobility state, a quantity of random access resources allocated by the target cell base station to the terminal device is also different. Details are as follows:

For example, if the terminal device is in a normal mobility state, n may be 1; if the terminal device is in a normal mobility state and the random access resource of the target cell base station is sufficient, n may be 2; or if the terminal device is in a normal mobility state and the random access resource of the target cell base station is insufficient, n may be 0. Specifically, n being 1 is used as an example. The target cell base station not only allocates, to the terminal device, random access resources corresponding to beams 0 and 1 in reported beams, but also allocates, to the terminal device, a random access resource corresponding to a beam 2 neighboring to the beam 0 and the beam 1.

If the terminal device is in a medium mobility state, n may be 2; if the terminal device is in a medium mobility state and the random access resource of the target cell base station is sufficient, n may be 3; or if the terminal device is in a medium mobility state and the random access resource of the target cell base station is insufficient, n may be 1. Specifically, n being 2 is used as an example. The target cell base station not only allocates, to the terminal device, random access resources corresponding to a beam 0 and a beam 1 in reported beams, but also allocates, to the terminal device, random access resources corresponding to a beam 2 and a beam 3 neighboring to the beam 0 and the beam 1.

If the terminal device is in a high mobility state, n may be 3; if the terminal device is in a high mobility state and the random access resource of the target cell base station is sufficient, n may be 4; or if the terminal device is in a high mobility state and the random access resource of the target cell base station is insufficient, n may be 2. Specifically, n being 3 is used as an example. The target cell base station not only allocates, to the terminal device, random access resources corresponding to a beam 0 and a beam 1 in reported beams, but also allocates, to the terminal device, random access resources corresponding to a beam 2, a beam 3, and a beam 4 neighboring to the beam 0 and the beam 1.

In this embodiment of this application, when the terminal device is in a different mobility state, the target cell base station allocates a different quantity of random access resources to the terminal device. A manner in which the target cell base station allocates the random access resource to the terminal device is more flexible, and an access failure probability of the terminal device in a handover process can be effectively reduced, or waste of resources caused because the target base station provides excessive random access resources can be reduced, thereby reducing waste of resources while ensuring a handover success rate of the terminal device, to improve resource utilization.

In a second process, the measurement report includes a current measurement report and a historical measurement report.

The target cell base station obtains a mobility direction of the terminal device based on information, other than the mobility state information, in the current measurement report and the historical measurement report; and
the target cell base station allocates the random access resource to the terminal device based on the mobility state information, the mobility direction, and beam information that is included in the current measurement report.

In this embodiment of this application, still referring to FIG. 1, an example in which the beam information in the current measurement report of the terminal device is a beam 3 and a beam 4 is used, and an example in which beam information in the historical measurement report is a beam 1 and a beam 2 is used. In this case, the target cell base station may determine, based on distribution of the beam 1, the beam 2, the beam 3, the beam 4, and beams of the target cell base station, the mobility direction of the terminal device, for example, a direction shown by an arrow in FIG. 1. The target cell base station further obtains the mobility direction of the terminal device on the basis of obtaining the mobility state of the terminal device, and therefore can more accurately allocate the random access resource to the terminal device. For example, when learning of the mobility state and the mobility direction of the terminal device, and the beam information, the target cell base station allocates, to the terminal device, random access resources corresponding to the beam 3 and the beam 4 and a random access resource corresponding to a beam 5 neighboring to the beam 3 and the beam 4, rather than a random access resource corresponding to a beam 0 neighboring to the beam 1 and the beam 2; or allocates, to the terminal device, random access resources of the beam 4 and a beam 5 neighboring to the beam 4. Therefore, the random access resource can be more accurately allocated to the terminal device by using this implementation.

For a specific implementation after the target cell base station allocates the random access resource to the terminal device and before the terminal device subsequently performs random access by using the allocated random access resource, refer to the implementations of steps S406 to S409 in FIG. 4. Details are not described herein again.

The following describes the technical solutions provided in the embodiments of this application with reference to the accompanying drawings. In the following description process, an example in which the technical solutions provided in this application are applied to the application scenario shown in FIG. 3 is used, and an example in which a source network device is a source base station and a target network device is a target base station is used.

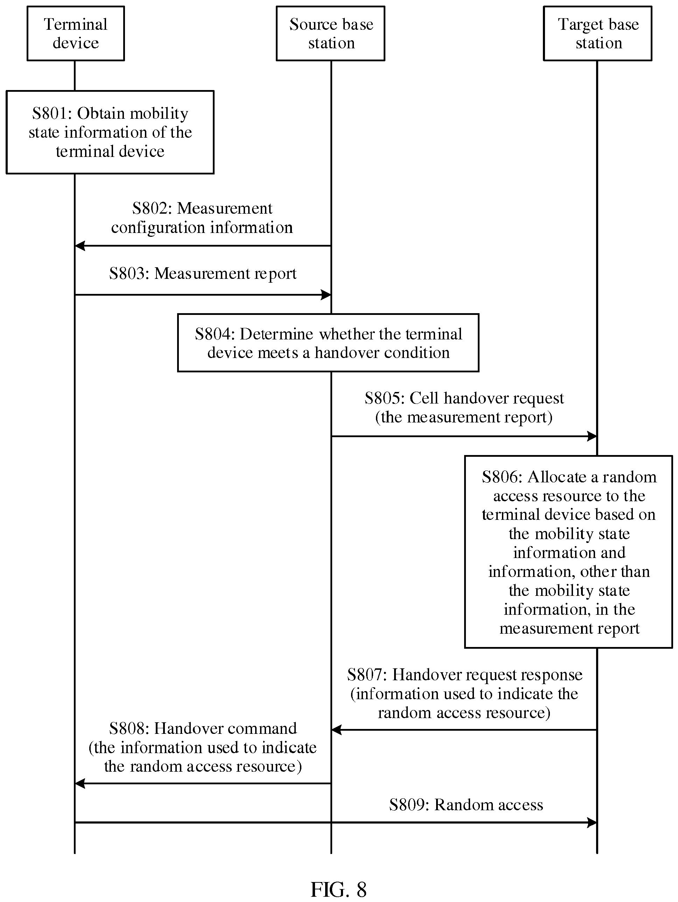

Referring to FIG. 8, an embodiment of this application provides a random access resource allocation method. A procedure of the method is briefly described as follows:
S801: A terminal device obtains mobility state information.
S802: A source base station sends measurement configuration information to the terminal device.
S803: The terminal device sends a measurement report to the source base station based on the received measurement configuration information, where the measurement report includes the mobility state information.
S804: The source base station determines, based on the received measurement report, whether the terminal device meets a handover condition.
S805: The source base station sends a cell handover request to the target base station, where the cell handover request includes the measurement report of the terminal device.
S806: The target base station allocates a random access resource to the terminal device based on the mobility state information of the terminal device and information, other than the mobility state information, in the measurement report.
S807: The target base station sends a handover request response to the source base station, where the handover request response includes information used to indicate the random access resource allocated by the target base station to the terminal device.
S808: The source base station sends a handover command to the terminal device based on the received handover request response, where the handover command includes the information used to indicate the random access resource allocated by the target base station to the terminal device.
S809: The terminal device performs random access based on the allocated random access resource.

The mobility state information of the terminal device includes at least one of a mobility state, a mobility speed, and a mobility direction.

In this embodiment of this application, the terminal device may obtain the mobility speed by using a speed sensor or a global positioning system (Global Positioning System, GPS), and obtains the mobility direction by using a direction sensor or an angle sensor. This is not limited in this embodiment of this application.

In this embodiment of this application, an execution sequence of step S801 and step S802 is not limited. To be specific, the terminal device may obtain the mobility state information of the terminal device after establishing a communication connection to the source base station, or may obtain the mobility state information of the terminal device when receiving the measurement configuration information sent by the source base station. This is not limited in this embodiment of this application.

In this embodiment of this application, the mobility state information may be sent to the source base station when a trigger event for the measurement report occurs, or the mobility state information may be sent to the source base station when the measurement report is sent to the source base station. Correspondingly, the mobility state information may be included in the measurement report and sent to the source base station, to reduce signaling overheads, or may be separately sent to the source base station. This is not limited in this embodiment of this application.

In this embodiment of this application, for implementations of step S804 to step S809, refer to the implementations of step S403 and S405 to S409 in FIG. 4. Details are not described herein again.

In this embodiment of this application, for a method for sending the handover request in step S805, refer to the implementations of step S603 to step S605 in FIG. 6A. Details are not described herein again.

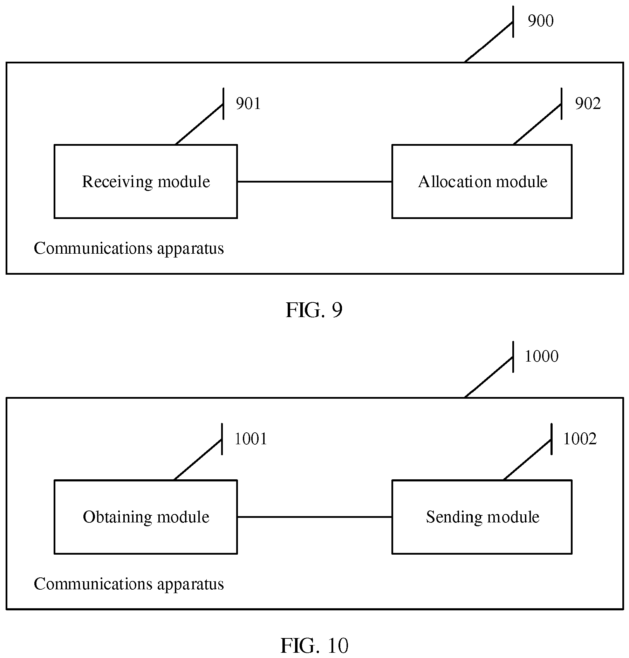

FIG. 9 is a schematic structural diagram of a communications apparatus 900. The communications apparatus 900 may implement functions of the network device described above. The communications apparatus 900 may include a receiving module 901 and an allocation module 902. The receiving module 901 may be configured to perform S405 in the embodiment shown in FIG. 4 or S607 in the embodiment shown in FIG. 6A and FIG. 6B, and/or configured to support another process of the technologies described in this specification. The allocation module 902 may be configured to perform S406 in the embodiment shown in FIG. 4 or S608 in the embodiment shown in FIG. 6A and FIG. 6B, and/or configured to support another process of the technologies described in this specification. All related content of steps in the foregoing method embodiments may be cited in function descriptions of corresponding functional modules. Details are not described herein again.

FIG. 10 is a schematic structural diagram of a communications apparatus 1000. The communications apparatus 1000 may implement functions of the network device described above. The communications apparatus 1000 may include an obtaining module 1001 and a sending module 1002. The obtaining module 1001 may be configured to perform S404 in the embodiment shown in FIG. 4 or S604 in the embodiment shown in FIG. 6A and FIG. 6B, and/or configured to support another process of the technologies described in this specification. The sending module 1002 may be configured to perform S405 in the embodiment shown in FIG. 4 or S605 in the embodiment shown in FIG. 6A and FIG. 6B, and/or configured to support another process of the technologies described in this specification. All related content of steps in the foregoing method embodiments may be cited in function descriptions of corresponding functional modules. Details are not described herein again.

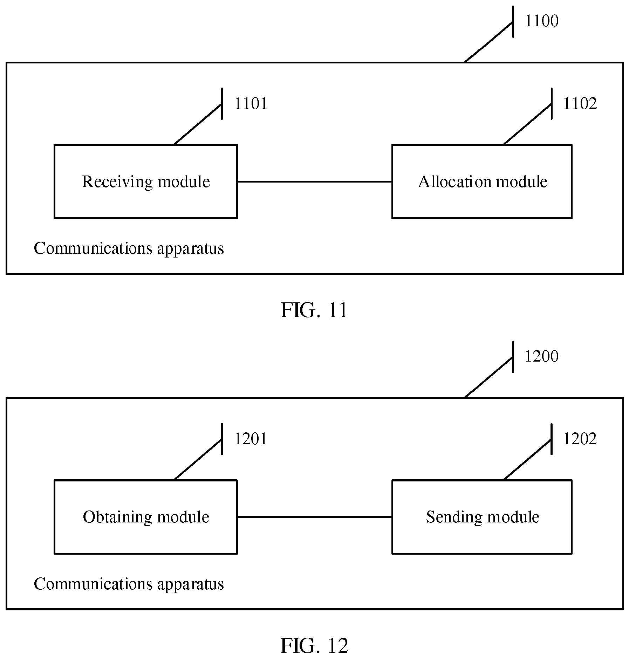

FIG. 11 is a schematic structural diagram of a communications apparatus 1100. The communications apparatus 1100 may implement functions of the network device described above. The communications apparatus 1100 may include a receiving module 1101 and an allocation module 1102. The receiving module 1101 and the allocation module 1102 may be configured to perform S704 in the embodiment shown in FIG. 7, and/or configured to support another process of the technologies described in this specification. All related content of steps in the foregoing method embodiments may be cited in function descriptions of corresponding functional modules. Details are not described herein again.

FIG. 12 is a schematic structural diagram of a communications apparatus 1200. The communications apparatus 1200 may implement functions of the network device described above. The communications apparatus 1200 may include an obtaining module 1201 and a sending module 1202. The obtaining module 1201 may be configured to perform S702 in the embodiment shown in FIG. 7, and/or configured to support another process of the technologies described in this specification. The sending module 1202 may be configured to perform S703 in the embodiment shown in FIG. 7, and/or configured to support another process of the technologies described in this specification. All related content of steps in the foregoing method embodiments may be cited in function descriptions of corresponding functional modules. Details are not described herein again.

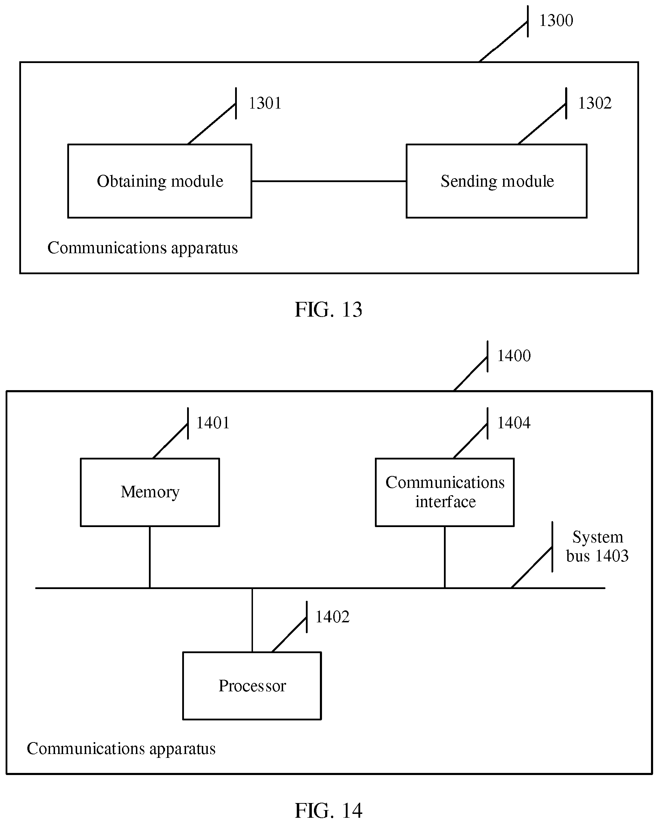

FIG. 13 is a schematic structural diagram of a communications apparatus 1300. The communications apparatus 1300 may implement functions of the terminal device described above. The communications apparatus 1300 may include an obtaining module 1301 and a sending module 1302. The obtaining module 1301 may be configured to perform S801 in the embodiment shown in FIG. 8, and/or configured to support another process of the technologies described in this specification. The sending module 1302 may be configured to perform S803 in the embodiment shown in FIG. 8, and/or configured to support another process of the technologies described in this specification. All related content of steps in the foregoing method embodiments may be cited in function descriptions of corresponding functional modules. Details are not described herein again.

In the embodiments of this application, the communications apparatus 900 to the communications apparatus 1300 are presented in a form in which each functional module is divided corresponding to each function, or may be presented in a form in which each functional module is divided in an integrated manner. The "module" herein maybe an application-specific integrated circuit (application-specific integrated circuit, ASIC), a processor and a memory for executing one or more software or firmware programs, an integrated logic circuit, and/or another component that can provide the foregoing functions.

In a simple embodiment, a person skilled in the art can figure out that any one of the communications apparatus 900 to the communications apparatus 1300 may be implemented by using a structure shown in FIG. 14.

As shown in FIG. 14, a communications apparatus 1400 may include: a memory 1401, a processor 1402, a system bus 1403, and a communications interface 1404. The processor 1402, the memory 1401, and the communications interface 1404 are connected by using the system bus 1403, the memory 1401 may be disposed in the processor 1402, and the memory 1401 and the processor 1402 may be implemented by using a chip. The memory 1401 is configured to store a computer-executable instruction. When the communications apparatus 1400 runs, the processor 1402 executes the computer-executable instruction stored in the memory 1401, to enable the communications apparatus 1400 to perform the steps performed by the terminal device in the random access resource allocation method provided in the embodiment shown in FIG. 4, the embodiment shown in FIG. 6A and FIG. 6B, the embodiment shown in FIG. 7, or the embodiment shown in FIG. 8. For the specific random access resource allocation method, refer to the foregoing descriptions and related descriptions in the accompanying drawings. Details are not described herein again. The communications interface 1404 may be a transceiver, or an independent receiver and transmitter.

In an example, the receiving module 901 may correspond to the communications interface 1404 in FIG. 14. The allocation module 902 may be built in or independent of the processor 1402 of the communications apparatus 1400 in a hardware form/software form, or may be built in or independent of the memory 1401 of the communications apparatus 1400 in a software form.

In an example, the sending module 1002 may correspond to the communications interface 1404 in FIG. 14. The obtaining module 1001 may be built in or independent of the memory 1401 of the communications apparatus 1400 in a hardware form/software form, or may be built in or independent of the processor 1402 of the communications apparatus 1400 in a hardware form.

In an example, the receiving module 1101 may correspond to the communications interface 1404 in FIG. 14. The allocation module 1102 may be built in or independent of the memory 1401 of the communications apparatus 1400 in a hardware form/software form, or may be built in or independent of the processor 1402 of the communications apparatus 1400 in a hardware form.

In an example, the sending module 1202 may correspond to the communications interface 1404 in FIG. 14. The obtaining module 1201 may be built in or independent of the memory 1401 of the communications apparatus 1400 in a hardware form/software form, or may be built in or independent of the processor 1402 of the communications apparatus 1400 in a hardware form.

In an example, the sending module 1302 may correspond to the communications interface 1404 in FIG. 14. The obtaining module 1301 may be built in or independent of the memory 1401 of the communications apparatus 1400 in a hardware form/software form, or may be built in or independent of the processor 1402 of the communications apparatus 1400 in a hardware form.

Optionally, the communications apparatus 1400 may be a field-programmable gate array (field-programmable gate array, FPGA), an application-specific integrated chip (application specific integrated circuit, ASIC), a system on a chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip. Alternatively, the communications apparatus 1400 may be an independent network element, for example, a network device or a terminal device.

Other embodiments which do not fall within the scope of protection defined by the claims are mentioned below:
An embodiment of this application further provides a computer storage medium. The storage medium may include a memory, the memory may store a program, and when the program is executed, all steps performed by the network device described in the method embodiment shown in FIG. 4 are performed.

An embodiment of this application further provides a computer storage medium. The storage medium may include a memory, the memory may store a program, and when the program is executed, all steps performed by the network device described in the method embodiment shown in FIG. 6A and FIG. 6B are performed.

An embodiment of this application further provides a computer storage medium. The storage medium may include a memory, the memory may store a program, and when the program is executed, all steps performed by the network device described in the method embodiment shown in FIG. 7 are performed.

An embodiment of this application further provides a computer storage medium. The storage medium may include a memory, the memory may store a program, and when the program is executed, all steps performed by the network device described in the method embodiment shown in FIG. 8 are performed.

The communications apparatus 900 to the communications apparatus 1300 provided in the embodiments of this application may be configured to perform the foregoing communication method. Therefore, for technical effects that can be achieved by the communications apparatus 900 to the communications apparatus 1300, refer to the foregoing method embodiments. Details are not described herein again.

In the embodiments of this application, the target network device receives the cell handover request that is sent by the source network device and that is used to request to hand over the terminal device from the source network device to the target network device, and the cell handover request includes the mobility state information of the terminal device and the measurement report of the terminal device. The target network device may allocate the random access resource to the terminal device based on the mobility state information and the measurement report of the terminal device. Because the target network device allocates the random access resource to the terminal device based on the mobility state of the terminal device, the manner in which the target network device allocates the random access resource to the terminal device is more flexible, and the access failure probability of the terminal device in the handover process can be effectively reduced, thereby increasing the handover success rate of the terminal device.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. In addition, the embodiments of this application may use a form of a computer program product that is implemented on one or more computer-usable storage media (including but not limited to a disk memory, a CD-ROM, and an optical memory) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or In one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to the embodiments of this application without departing from scope of this application. This application is intended to cover these modifications and variations provided that they fall within the scope of protection defined by the claims.

## Claims

1. A random access resource allocation method, comprising:
receiving, by a target network device, a cell handover request that is sent (S405) by a source network device and that is used to request to hand over a terminal device from the source network device to the target network device, wherein the cell handover request comprises mobility state information of the terminal device and a measurement report of the terminal device; and
allocating (S406), by the target network device, a random access resource to the terminal device based on the mobility state information and beam information that is included in the measurement report.

2. The method according to claim 1, wherein the measurement report comprises a current measurement report, and the current measurement report is a measurement report reported by the terminal device for performing a current handover; and
the allocating (S406), by the target network device, the random access resource to the terminal device based on the mobility state information and beam information that is comprised in the measurement report comprises:
allocating, by the target network device to the terminal device based on the mobility state information, a random access resource corresponding to a beam indicated by beam information comprised in the current measurement report, and a random access resource corresponding to n beams related to the beam, wherein n is an integer, and n is determined based on the mobility state information and a random access resource that can be provided by the target network device.

3. The method according to claim 1, wherein the measurement report comprises a current measurement report and a historical measurement report, the current measurement report is a measurement report reported by the terminal device for performing a current handover, and the historical measurement report is a measurement report reported by the terminal device for performing a handover operation before the current handover; and
the allocating (S406), by the target network device, the random access resource to the terminal device based on the mobility state information and beam information that is comprised in the measurement report comprises:
obtaining, by the target network device, a mobility direction of the terminal device based on the current measurement report and the historical measurement report; and
allocating, by the target network device, the random access resource to the terminal device based on the mobility state information, the mobility direction, and beam information that is comprised in the current measurement report.

4. The method according to any one of claims 1 to 3, wherein the mobility state information comprises a high mobility state, a medium mobility state, and a normal mobility state, the high mobility state is a state in which a quantity of downlink beams switched by the terminal device within predetermined duration is greater than a first predetermined quantity, the medium mobility state is a state in which the quantity of downlink beams switched by the terminal device within the predetermined duration is greater than a second predetermined quantity and is less than or equal to the first predetermined quantity, the normal mobility state is a state in which the quantity of downlink beams switched by the terminal device within the predetermined duration is less than or equal to the second predetermined quantity, the first predetermined quantity is obtained based on a requirement on a handover success rate of the terminal device and/or the random access resource that can be provided by the target network device, and the second predetermined quantity is obtained based on the requirement on the handover success rate of the terminal device and/or the random access resource that can be provided by the target network device.

5. A random access resource allocation method, comprising:
obtaining (S404), by a source network device, mobility state information of a terminal device; and
sending (S405), by the source network device to a target network device, a cell handover request used to request to hand over the terminal device from the source network device to the target network device, wherein the cell handover request comprises the mobility state information and a measurement report of the terminal device, and allocating (S406), by the target network device, a random access resource to the terminal device based on the mobility state information and beam information that is included in the measurement report.

6. The method according to claim 5, wherein the obtaining (S404), by a source network device, mobility state information of a terminal device comprises:
determining, by the source network device, a quantity of downlink beams switched by the terminal device within predetermined duration; and
obtaining, by the source network device, the mobility state information of the terminal device based on the quantity.

7. The method according to claim 5, wherein the obtaining (S404), by a source network device, mobility state information of a terminal device comprises:
determining, by the source network device, a quantity of downlink beams switched by the terminal device within predetermined duration, and determining a distance between the terminal device and the source network device; and
obtaining, by the source network device, the mobility state information of the terminal device based on the quantity and the distance.

8. The method according to claim 6, wherein the obtaining, by the source network device, the mobility state information of the terminal device based on the quantity comprises:
if the quantity is greater than a first predetermined quantity, obtaining, by the source network device, that the mobility state information of the terminal device is a high mobility state;
if the quantity is greater than a second predetermined quantity and is less than or equal to a first predetermined quantity, obtaining, by the source network device, that the mobility state information of the terminal device is a medium mobility state; or
if the quantity is less than or equal to a second predetermined quantity, obtaining, by the source network device, that the mobility state information of the terminal device is a normal mobility state, wherein
the first predetermined quantity is obtained based on a requirement on a handover success rate of the terminal device and/or a random access resource provided by the target network device, and the second predetermined quantity is obtained based on the requirement on the handover success rate of the terminal device and/or the random access resource provided by the target network device.

9. The method according to any one of claims 5 to 8, wherein
the measurement report comprises a current measurement report of the terminal device; or
the measurement report comprises a current measurement report of the terminal device and a historical measurement report of the terminal device, wherein the current measurement report is a measurement report reported by the terminal device for performing a current handover, and the historical measurement report is a measurement report reported by the terminal device for performing a handover operation before the current handover.

10. A random access resource allocation method, comprising:
obtaining, by a terminal device, mobility state information of the terminal device; and
sending, by the terminal device, the mobility state information to a source base station, and
sending (S405), by the source base station to a target base station, a cell handover request used to request to hand over the terminal device from the source base station to the target base station, wherein the cell handover request comprises the mobility state information and a measurement report of the terminal device, and
allocating (S406), by the target base station, a random access resource to the terminal device based on the mobility state information and beam information that is included in the measurement report..

11. The method according to claim 10, wherein the mobility state information comprises at least one of a mobility state, a mobility direction, and a mobility speed.

12. A communications apparatus comprising means configured to perform the steps of a method according to any one of claims 1-4.

13. A communications system comprising means configured to perform the steps of a method according to any one of claims 5-9.

14. A communications system comprising means configured to perform the steps of a method according to any one of claims 10-11.

## Patentansprüche

1. Wahlfreier-Zugriff-Ressourcenzuteilungsverfahren, das Folgendes umfasst:
Empfangen, durch eine Zielnetzvorrichtung, einer Funkzellenverbindungsübergabeanforderung, die durch eine Quellnetzvorrichtung gesendet wird (S405) und die verwendet wird, um anzufordern, ein Endgerät von der Quellnetzvorrichtung an die Zielnetzvorrichtung zu übergeben, wobei die Funkzellenverbindungsübergabeanforderung Mobilitätszustandsinformationen des Endgeräts und einen Messbericht des Endgeräts umfasst; und
Zuteilen (S406), durch die Zielnetzvorrichtung, einer Wahlfreier-Zugriff-Ressource zu dem Endgerät basierend auf den Mobilitätszustandsinformationen und Beam-Informationen, die in dem Messbericht beinhaltet sind.

2. Verfahren nach Anspruch 1, wobei der Messbericht einen aktuellen Messbericht umfasst und der aktuelle Messbericht ein Messbericht ist, der durch das Endgerät zum Durchführen einer aktuellen Verbindungsübergabe berichtet wird; und
das Zuteilen (S406), durch die Zielnetzvorrichtung, der Wahlfreier-Zugriff-Ressource zu dem Endgerät basierend auf den Mobilitätszustandsinformationen und den Beam-Informationen, die in dem Messbericht enthalten sind, Folgendes umfasst:
Zuteilen, durch die Zielnetzvorrichtung zu dem Endgerät basierend auf den Mobilitätszustandsinformationen, einer Wahlfreier-Zugriff-Ressource, die einem Beam entspricht, der durch die Beam-Informationen angezeigt wird, die in dem aktuellen Messbericht enthalten sind, und einer Wahlfreier-Zugriff-Ressource, die n Beams entspricht, die sich auf den Beam beziehen, wobei n eine ganze Zahl ist und n basierend auf den Mobilitätszustandsinformationen und einer Wahlfreier-Zugriff-Ressource bestimmt wird, die durch die Zielnetzvorrichtung bereitgestellt werden kann.

3. Verfahren nach Anspruch 1, wobei der Messbericht einen aktuellen Messbericht und einen historischen Messbericht umfasst, wobei der aktuelle Messbericht ein Messbericht ist, der durch das Endgerät zum Durchführen einer aktuellen Verbindungsübergabe berichtet wird, und der historische Messbericht ein Messbericht ist, der durch das Endgerät zum Durchführen eines Verbindungsübergabebetriebs vor der aktuellen Verbindungsübergabe berichtet wird; und
das Zuteilen (S406), durch die Zielnetzvorrichtung, der Wahlfreier-Zugriff-Ressource zu dem Endgerät basierend auf den Mobilitätszustandsinformationen und den Beam-Informationen, die in dem Messbericht enthalten sind, Folgendes umfasst:
Erhalten, durch die Zielnetzvorrichtung, einer Mobilitätsrichtung des Endgeräts basierend auf dem aktuellen Messbericht und dem historischen Messbericht; und
Zuteilen, durch die Zielnetzvorrichtung, der Wahlfreier-Zugriff-Ressource zu dem Endgerät basierend auf den Mobilitätszustandsinformationen, der Mobilitätsrichtung und Beam-Informationen, die in dem aktuellen Messbericht enthalten sind.

4. Verfahren nach einem der Ansprüche 1 bis 3, wobei die Mobilitätszustandsinformationen einen Zustand hoher Mobilität, einen Zustand mittlerer Mobilität und einen Zustand normaler Mobilität umfassen, wobei der Zustand hoher Mobilität ein Zustand ist, in dem eine Anzahl von Downlink-Beams, die durch das Endgerät innerhalb einer zuvor bestimmten Dauer gewechselt wird, größer als eine erste zuvor bestimmte Anzahl ist, wobei der Zustand mittlerer Mobilität ein Zustand ist, in dem die Anzahl von Downlink-Beams, die durch das Endgerät innerhalb einer zuvor bestimmten Dauer gewechselt wird, größer als eine zweite zuvor bestimmte Anzahl ist und kleiner als oder gleich der ersten zuvor bestimmten Anzahl ist, wobei der Zustand normaler Mobilität ein Zustand ist, in dem die Anzahl von Downlink-Beams, die durch das Endgerät innerhalb der zuvor bestimmten Dauer gewechselt wird, kleiner als oder gleich der zweiten zuvor bestimmten Anzahl ist, wobei die erste zuvor bestimmte Anzahl basierend auf einer Voraussetzung an eine Verbindungsübergabeerfolgsrate des Endgeräts und/oder die Wahlfreier-Zugriff-Ressource erhalten wird, die durch die Zielnetzvorrichtung bereitgestellt werden kann, und die zweite zuvor bestimmte Anzahl basierend auf der Voraussetzung an die Verbindungsübergabeerfolgsrate des Endgeräts und/oder die Wahlfreier-Zugriff-Ressource erhalten wird, die durch die Zielnetzvorrichtung bereitgestellt werden kann.

5. Wahlfreier-Zugriff-Ressourcenzuteilungsverfahren, das Folgendes umfasst:
Erhalten (S404), durch eine Quellnetzvorrichtung, von Mobilitätszustandsinformationen eines Endgeräts; und
Senden (S405), durch die Quellnetzvorrichtung an eine Zielnetzvorrichtung, einer Funkzellenverbindungsübergabeanforderung, die verwendet wird, um anzufordern, das Endgerät von der Quellnetzvorrichtung an die Zielnetzvorrichtung zu übergeben, wobei die Funkzellenverbindungsübergabeanforderung die Mobilitätszustandsinformationen und einen Messbericht des Endgeräts umfasst, und Zuteilen (S406), durch die Zielnetzvorrichtung, einer Wahlfreier-Zugriff-Ressource zu dem Endgerät basierend auf den Mobilitätszustandsinformationen und Beam-Informationen, die in dem Messbericht beinhaltet sind.

6. Verfahren nach Anspruch 5, wobei das Erhalten (S404), durch eine Quellnetzvorrichtung, von Mobilitätszustandsinformationen eines Endgeräts Folgendes umfasst:
Bestimmen, durch die Quellnetzvorrichtung, einer Anzahl von Downlink-Beams, die durch das Endgerät innerhalb einer zuvor bestimmten Dauer gewechselt wird; und
Erhalten, durch die Quellnetzvorrichtung, der Mobilitätszustandsinformationen des Endgeräts basierend auf der Anzahl.

7. Verfahren nach Anspruch 5, wobei das Erhalten (S404), durch eine Quellnetzvorrichtung, von Mobilitätszustandsinformationen eines Endgeräts Folgendes umfasst:
Bestimmen, durch die Quellnetzvorrichtung, einer Anzahl von Downlink-Beams, die durch das Endgerät innerhalb einer zuvor bestimmten Dauer gewechselt wird, und Bestimmen eines Abstands zwischen dem Endgerät und der Quellnetzvorrichtung; und
Erhalten, durch die Quellnetzvorrichtung, der Mobilitätszustandsinformationen des Endgeräts basierend auf der Anzahl und dem Abstand.

8. Verfahren nach Anspruch 6, wobei das Erhalten, durch die Quellnetzvorrichtung, der Mobilitätszustandsinformationen des Endgeräts basierend auf der Anzahl Folgendes umfasst:
wenn die Anzahl größer als eine erste zuvor bestimmte Anzahl ist, Erhalten, durch die Quellnetzvorrichtung, dass die Mobilitätszustandsinformationen des Endgeräts ein Zustand hoher Mobilität sind;
wenn die Anzahl größer als eine zweite zuvor bestimmte Anzahl ist und kleiner als oder gleich einer ersten zuvor bestimmten Anzahl ist, Erhalten, durch die Quellnetzvorrichtung, dass die Mobilitätszustandsinformationen des Endgeräts ein Zustand mittlerer Mobilität sind; oder
wenn die Anzahl kleiner als oder gleich einer zweiten zuvor bestimmten Anzahl ist, Erhalten, durch die Quellnetzvorrichtung, dass die Mobilitätszustandsinformationen des Endgeräts ein Zustand normaler Mobilität sind,
wobei
die erste zuvor bestimmte Anzahl basierend auf einer Voraussetzung an eine Verbindungsübergabeerfolgsrate des Endgeräts und/oder eine Wahlfreier-Zugriff-Ressource erhalten wird, die durch die Zielnetzvorrichtung bereitgestellt wird, und die zweite zuvor bestimmte Anzahl basierend auf der Voraussetzung an die Verbindungsübergabeerfolgsrate des Endgeräts und/oder die Wahlfreier-Zugriff-Ressource erhalten wird, die durch die Zielnetzvorrichtung bereitgestellt wird.

9. Verfahren nach einem der Ansprüche 5 bis 8, wobei
der Messbericht einen aktuellen Messbericht des Endgeräts umfasst; oder
der Messbericht einen aktuellen Messbericht des Endgeräts und einen historischen Messbericht des Endgeräts umfasst, wobei der aktuelle Messbericht ein Messbericht ist, der durch das Endgerät zum Durchführen einer aktuellen Verbindungsübergabe berichtet wird, und der historische Messbericht ein Messbericht ist, der durch das Endgerät zum Durchführen eines Verbindungsübergabebetriebs vor der aktuellen Verbindungsübergabe berichtet wird.

10. Wahlfreier-Zugriff-Ressourcenzuteilungsverfahren, das Folgendes umfasst:
Erhalten, durch ein Endgerät, von Mobilitätszustandsinformationen des Endgeräts; und
Senden, durch das Endgerät, der Mobilitätszustandsinformationen an eine Quellbasisstation und
Senden (S405), durch die Quellbasisstation an eine Zielbasisstation, einer Funkzellenverbindungsübergabeanforderung, die verwendet wird, um anzufordern, das Endgerät von der Quellbasisstation an die Zielbasisstation zu übergeben, wobei die Funkzellenverbindungsübergabeanforderung die Mobilitätszustandsinformationen und einen Messbericht des Endgeräts umfasst, und Zuteilen (S406), durch die Zielbasisstation, einer Wahlfreier-Zugriff-Ressource zu dem Endgerät basierend auf den Mobilitätszustandsinformationen und Beam-Informationen, die in dem Messbericht beinhaltet sind.

11. Verfahren nach Anspruch 10, wobei die Mobilitätszustandsinformationen einen Mobilitätszustand, eine Mobilitätsrichtung und/oder eine Mobilitätsgeschwindigkeit umfassen.

12. Kommunikationseinrichtung, die Mittel umfasst, die konfiguriert sind, um die Schritte eines Verfahrens nach einem der Ansprüche 1-4 durchzuführen.

13. Kommunikationssystem, das Mittel umfasst, die konfiguriert sind, um die Schritte eines Verfahrens nach einem der Ansprüche 5-9 durchzuführen.

14. Kommunikationssystem, das Mittel umfasst, die konfiguriert sind, um die Schritte eines Verfahrens nach einem der Ansprüche 10-11 durchzuführen.

## Revendications

1. Procédé d'attribution de ressources d'accès aléatoire, comprenant :
la réception, par un dispositif de réseau cible, d'une demande de transfert de cellule qui est envoyée (S405) par un dispositif de réseau source et qui est utilisée pour demander le transfert d'un dispositif terminal du dispositif de réseau source au dispositif de réseau cible, la demande de transfert de cellule comprenant des informations d'état de mobilité du dispositif terminal et un rapport de mesure du dispositif terminal ; et
l'attribution (S406), par le dispositif de réseau cible, d'une ressource d'accès aléatoire au dispositif terminal en fonction des informations d'état de mobilité et des informations de faisceau qui sont incluses dans le rapport de mesure.

2. Procédé selon la revendication 1, dans lequel le rapport de mesure comprend un rapport de mesure actuel, et le rapport de mesure actuel est un rapport de mesure rapporté par le dispositif terminal pour effectuer un transfert en cours ; et
l'attribution (S406), par le dispositif de réseau cible, de la ressource d'accès aléatoire au dispositif terminal en fonction des informations d'état de mobilité et des informations de faisceau qui sont comprises dans le rapport de mesure comprend :
l'attribution, par le dispositif de réseau cible au dispositif terminal en fonction des informations d'état de mobilité, d'une ressource d'accès aléatoire correspondant à un faisceau indiqué par les informations de faisceau comprises dans le rapport de mesure actuel, et d'une ressource d'accès aléatoire correspondant à n faisceaux liés au faisceau, n étant un entier, et n étant déterminé en fonction des informations d'état de mobilité et d'une ressource d'accès aléatoire qui peuvent être fournies par le dispositif de réseau cible.

3. Procédé selon la revendication 1, dans lequel le rapport de mesure comprend un rapport de mesure actuel et un ancien rapport de mesure, le rapport de mesure actuel est un rapport de mesure rapporté par le dispositif terminal pour effectuer un transfert en cours, et l'ancien rapport de mesure est un rapport de mesure rapporté par le dispositif terminal pour effectuer une opération de transfert avant le transfert en cours ; et
l'attribution (S406), par le dispositif de réseau cible, de la ressource d'accès aléatoire au dispositif terminal en fonction des informations d'état de mobilité et des informations de faisceau qui sont comprises dans le rapport de mesure comprend :
l'obtention, par le dispositif de réseau cible, d'une direction de mobilité du dispositif terminal en fonction du rapport de mesure actuel et de l'ancien rapport de mesure ; et
l'attribution, par le dispositif de réseau cible, de la ressource d'accès aléatoire au dispositif terminal en fonction des informations d'état de mobilité, de la direction de mobilité et des informations de faisceau qui sont comprises dans le rapport de mesure actuel.

4. Procédé selon l'une quelconque des revendications 1 à 3, dans lequel les informations d'état de mobilité comprennent un état de mobilité élevé, un état de mobilité moyen et un état de mobilité normal, l'état de mobilité élevé étant un état dans lequel une quantité de faisceaux de liaison descendante commutés par le dispositif terminal pendant une durée prédéterminée est supérieure à une première quantité prédéterminée, l'état de mobilité moyen est un état dans lequel la quantité de faisceaux de liaison descendante commutés par le dispositif terminal dans la durée prédéterminée est supérieure à une seconde quantité prédéterminée et est inférieure à ou égal à la première quantité prédéterminée, l'état de mobilité normal est un état dans lequel la quantité de faisceaux de liaison descendante commutés par le dispositif terminal dans la durée prédéterminée est inférieure ou égale à la seconde quantité prédéterminée, la première quantité prédéterminée étant obtenue en fonction d'une exigence concernant un taux de réussite de transfert du dispositif terminal et/ou de la ressource d'accès aléatoire qui peut être fournie par le dispositif de réseau cible, et la seconde quantité prédéterminée est obtenue en fonction de l'exigence concernant le taux de réussite de transfert du dispositif terminal et/ou de la ressource d'accès aléatoire qui peut être fournie par le dispositif de réseau cible.

5. Procédé d'attribution de ressources d'accès aléatoire, comprenant :
l'obtention (S404), par un dispositif de réseau source, d'informations d'état de mobilité d'un dispositif terminal ; et
l'envoi (S405), par le dispositif de réseau source à un dispositif de réseau cible, d'une demande de transfert de cellule utilisée pour demander le transfert du dispositif terminal du dispositif de réseau source au dispositif de réseau cible, la demande de transfert de cellule comprenant les informations d'état de mobilité et un rapport de mesure du dispositif terminal, et l'attribution (S406), par le dispositif de réseau cible, d'une ressource d'accès aléatoire au dispositif terminal en fonction des informations d'état de mobilité et des informations de faisceau qui sont incluses dans le rapport de mesure.

6. Procédé selon la revendication 5, dans lequel l'obtention (S404), par un dispositif de réseau source, d'informations d'état de mobilité d'un dispositif terminal comprend :
la détermination, par le dispositif de réseau source, d'une quantité de faisceaux de liaison descendante commutés par le dispositif terminal pendant une durée prédéterminée ; et
l'obtention, par le dispositif de réseau source, des informations d'état de mobilité du dispositif terminal en fonction de la quantité.

7. Procédé selon la revendication 5, dans lequel l'obtention (S404), par un dispositif de réseau source, d'informations d'état de mobilité d'un dispositif terminal comprend :
la détermination, par le dispositif de réseau source, d'une quantité de faisceaux de liaison descendante commutés par le dispositif terminal pendant une durée prédéterminée, et la détermination d'une distance entre le dispositif terminal et le dispositif de réseau source ; et
l'obtention, par le dispositif de réseau source, des informations d'état de mobilité du dispositif terminal en fonction de la quantité et de la distance.

8. Procédé selon la revendication 6, dans lequel l'obtention, par le dispositif de réseau source, des informations d'état de mobilité du dispositif terminal en fonction de la quantité comprend :
si la quantité est supérieure à une première quantité prédéterminée, l'obtention, par le dispositif de réseau source, du fait que les informations d'état de mobilité du dispositif terminal sont dans un état de mobilité élevé ;
si la quantité est supérieure à une seconde quantité prédéterminée et est inférieure ou égale à une première quantité prédéterminée, l'obtention, par le dispositif de réseau source, du fait que les informations d'état de mobilité du dispositif terminal sont dans un état de mobilité moyen ; ou
si la quantité est inférieure ou égale à une seconde quantité prédéterminée, l'obtention, par le dispositif de réseau source, du fait que les informations d'état de mobilité du dispositif terminal sont dans un état de mobilité normal, la première quantité prédéterminée étant obtenue en fonction d'une exigence concernant un taux de réussite de transfert du dispositif terminal et/ou d'une ressource d'accès aléatoire fournie par le dispositif de réseau cible, et la seconde quantité prédéterminée étant obtenue en fonction de l'exigence concernant le taux de réussite de transfert du dispositif terminal et/ou de la ressource d'accès aléatoire fournie par le dispositif de réseau cible.

9. Procédé selon l'une quelconque des revendications 5 à 8, dans lequel le rapport de mesure comprend un rapport de mesure actuel du dispositif terminal ; ou
le rapport de mesure comprend un rapport de mesure actuel du dispositif terminal et un ancien rapport de mesure du dispositif terminal, le rapport de mesure actuel étant un rapport de mesure rapporté par le dispositif terminal pour effectuer un transfert en cours, et l'ancien rapport de mesure étant un rapport de mesure rapporté par le dispositif terminal pour effectuer une opération de transfert avant le transfert en cours.

10. Procédé d'attribution de ressources d'accès aléatoire, comprenant :
l'obtention, par un dispositif terminal, des informations d'état de mobilité du dispositif terminal ; et
l'envoi, par le dispositif terminal, des informations d'état de mobilité à une station de base source, et l'envoi (S405), par la station de base source à une station de base cible, d'une demande de transfert de cellule utilisée pour demander le transfert du dispositif terminal de la station de base source à la station de base cible, la demande de transfert de cellule comprenant les informations d'état de mobilité et un rapport de mesure du dispositif terminal, et l'attribution (S406), par la station de base cible, d'une ressource d'accès aléatoire au dispositif terminal en fonction des informations d'état de mobilité et les informations sur le faisceau qui sont incluses dans le rapport de mesure.

11. Procédé selon la revendication 10, dans lequel les informations d'état de mobilité comprennent un état de mobilité et/ou une direction de mobilité et/ou une vitesse de mobilité.

12. Dispositif de communication comprenant des moyens configurés pour exécuter les étapes d'un procédé selon l'une quelconque des revendications 1 à 4.

13. Dispositif de communication comprenant des moyens configurés pour exécuter les étapes d'un procédé selon l'une quelconque des revendications 5 à 9.

14. Dispositif de communication comprenant des moyens configurés pour exécuter les étapes d'un procédé selon l'une quelconque des revendications 10 à 11.
